# FASCICULE DE BREVET EUROPEEN

(11) **EP 3 853 638 B1**
(45) Date de publication et mention de la délivrance du brevet: **14.09.2022**
(21) Numéro de dépôt: 19835439.1
(22) Date de dépôt: 31.10.2019
(51) Int. Cl.: G01T 1/203, G21K 4/00, C07C 13/70

(54) **UTILISATION DE CYCLOPHANES EN TANT QU'AGENTS DE DISCRIMINATION ENTRE LES NEUTRONS ET LES RAYONS GAMMA DANS UN SCINTILLATEUR PLASTIQUE**
VERVENDUNG VON CYCLOPHANE ALS MITTEL ZUR UNTERSCHEIDUNG ZWISCHEN NEUTRONEN UND GAMMASTRAHLEN IN EINEM KUNSTSTOFFSZINTILLATOR
USE OF CYCLOPHANES AS AGENTS FOR DISCRIMINATING BETWEEN NEUTRONS AND GAMMA RAYS IN A PLASTIC SCINTILLATOR

(30) Priorité: 08.11.2018 FR 1860318
(43) Date de publication de la demande: 28.07.2021
(73) Titulaire: Commissariat à l'énergie atomique et aux énergies alternatives, 75015 Paris (FR); Sorbonne Université, 75006 Paris (FR); Centre National de la Recherche Scientifique, 75794 Paris Cedex 16 (FR)
(72) Inventeur: BERTRAND, Guillaume, 07380 MEYRAS (FR); HAMEL, Matthieu, 50100 CHERBOURG (FR); KREHER, David, 92110 CLICHY (FR); LI, Haixia, 94800 VILLEJUIF (FR); MATHEVET, Fabrice, 94270 LE KREMLIN BICETRE (FR); MONTBARBON, Eva, 01630 SAINT JEAN DE GONVILLE (FR)
(74) Mandataire: Brevalex
(86) Numéro de dépôt international: PCT/FR2019/052587
(87) Numéro de publication internationale: WO 2020/094953

(56) Documents cités:
- RU-C1- 2 150 128
- US-A1- 2012 241 630
- US-A1- 2017 260 447
- GUILLAUME H. V. BERTRAND ET AL: "Current Status on Plastic Scintillators Modifications", CHEMISTRY - A EUROPEAN JOURNAL, vol. 20, no. 48, 21 octobre 2014 (2014-10-21), pages 15660-15685, XP055601287, DE ISSN: 0947-6539, DOI: 10.1002/chem.201404093
- Instruments: "New Polystyrene-Based Scintillators", Original Russian Text Copyright 2002 by Britvich, 1 janvier 2002 (2002-01-01), pages 644-654, XP055601509, Extrait de l'Internet: URL:https://link.springer.com/content/pdf/ 10.1023/A:1020402001190.pdf [extrait le 2019-07-02]
- BLANC PAULINE ET AL: "Neutron/gamma pulse shape discrimination in plastic scintillators: Preparation and characterization of various compositions", NUCLEAR INSTRUMENTS & METHODS IN PHYSICS RESEARCH. SECTION A, vol. 750, 11 mars 2014 (2014-03-11), pages 1-11, XP028640652, ISSN: 0168-9002, DOI: 10.1016/J.NIMA.2014.02.053
- BERTRAND GUILLAUME H V ET AL: "Pulse shape discrimination between (fast or thermal) neutrons and gamma rays with plastic scintillators: State of the art", NUCLEAR INSTRUMENTS & METHODS IN PHYSICS RESEARCH. SECTION A, vol. 776, 8 décembre 2014 (2014-12-08), pages 114-128, XP029196614, ISSN: 0168-9002, DOI: 10.1016/J.NIMA.2014.12.024
- DATABASE MEDLINE [Online] US NATIONAL LIBRARY OF MEDICINE (NLM), BETHESDA, MD, US; 24 November 2014 (2014-11-24), BERTRAND GUILLAUME H V ET AL: "Current status on plastic scintillators modifications.", Database accession no. NLM25335882 & BERTRAND GUILLAUME H V ET AL: "Current status on plastic scintillators modifications.", CHEMISTRY (WEINHEIM AN DER BERGSTRASSE, GERMANY) 24 NOV 2014, vol. 20, no. 48, 24 November 2014 (2014-11-24), pages 15660-15685, ISSN: 1521-3765

## Description

### DOMAINE TECHNIQUE

L'invention se rapporte au domaine de la scintillation plastique.

Plus spécifiquement, l'invention se rapporte à l'utilisation d'au moins un cyclophane dans un scintillateur plastique comme agent de discrimination entre les neutrons et les rayons gamma, en tant que substitut aux fluorophores qui sont utilisés dans les scintillateurs plastiques ou en tant que complément de ces fluorophores.

L'invention trouve des applications dans tous les domaines dans lesquels il est souhaitable d'identifier la présence de neutrons et de rayons gamma dans un rayonnement ionisant et de faire la différence entre la part de ce rayonnement due aux neutrons et celle due aux rayons gamma et, en particulier :
- dans l'industrie, par exemple pour la mesure de paramètres physiques de pièces en cours de fabrication, pour l'inspection non destructrice de matériaux, pour le contrôle de la radioactivité aux points d'entrée et de sorties de sites, notamment nucléaires, et pour le contrôle de déchets radioactifs ;
- en géophysique, par exemple pour l'évaluation de la radioactivité naturelle des sols ;
- en physique fondamentale et, notamment, en physique nucléaire ;
- dans la sécurité des biens et des personnes, par exemple pour la sécurité d'infrastructures critiques, le contrôle de marchandises en circulation (bagages, conteneurs, véhicules, ...) ainsi que pour la radioprotection des travailleurs susceptibles d'être exposés à des rayonnements ionisants dans l'exercice de leur activité professionnelle (radiologie diagnostique, radiologie interventionnelle, radiothérapie, curiethérapie, médecine nucléaire, etc) ; ou encore
- en imagerie médicale qui représente aujourd'hui l'un des principaux domaines d'application des scintillateurs en général et des scintillateurs plastiques en particulier.

### ÉTAT DE LA TECHNIQUE ANTÉRIEURE

Un scintillateur plastique (aussi appelé plastique scintillant) est un matériau polymère fluorescent qui a la capacité d'émettre des photons, dits photons de scintillation, lorsqu'il est excité par une particule ou un rayonnement ionisant.

Un scintillateur plastique se compose classiquement d'une matrice polymère, de nature organique, dans laquelle est (sont) inclus au moins un fluorophore et, le plus souvent, deux fluorophores différents, à savoir : un fluorophore dit primaire, qui a pour rôle de transformer une énergie électronique en une lumière fluorescente et un fluorophore dit secondaire, qui joue le rôle de décaleur de longueur d'onde (ou « *wavelength shifter »* en anglais) en absorbant la lumière émise par le fluorophore primaire et en la réémettant à une longueur d'onde plus élevée, dans la plage où le rendement quantique de conversion des photons de scintillation en photoélectrons d'un convertisseur traditionnel (c'est-à-dire d'un tube photomultiplicateur) est le plus important.

Outre qu'il doit être capable de transformer avec un bon rendement l'énergie des particules ou des rayonnements ionisants en énergie lumineuse utile, un scintillateur plastique doit présenter un certain nombre de caractéristiques : en particulier, il doit être transparent aux longueurs d'onde d'émission des photons de scintillation ; il doit être chimiquement et mécaniquement stable et il doit être facile à produire.

De ce fait, les scintillateurs plastiques comprennent typiquement comme matrice polymère, une matrice résultant de la polymérisation de monomères et/ou d'oligomères essentiellement, voire exclusivement, hydrocarbonés et, le plus souvent, aromatiques telle qu'une matrice de polystyrène, de polyvinyltoluène ou une matrice de poly(*N*-vinyl-carbazole).

La discrimination entre les neutrons et les rayons gamma par un scintillateur repose schématiquement sur le processus suivant : un neutron ou un rayon gamma incident interagit avec le scintillateur en créant une particule de recul qui ionise le matériau du scintillateur. Pour un rayon gamma, la particule de recul est un électron tandis que, pour un neutron, il s'agit d'un proton. Un proton étant 50 000 fois plus massique qu'un électron, il dépose son énergie de manière plus dense que ne le fait un électron. Il en résulte qu'une interaction d'un scintillateur avec un neutron donne un nuage d'ionisation et, donc, d'excitation plus dense qu'une interaction de ce scintillateur avec un rayon gamma.

Or, certains processus photophysiques d'interaction entre deux états excités dépendent de leurs distances, notamment l'annihilation triplet-triplet en 1/r⁶. Cette annihilation triplet-triplet (ou ATT) donne lieu à l'émission d'une fluorescence avec une composante temporelle plus longue.

Les mécanismes mis en jeu peuvent être résumés de la façon suivante :
- Interaction avec un neutron -> proton de recul -> nuage ionisé localisé -> forte densité d'états excités -> forte probabilité d'ATT -> composante lente de la fluorescence émise significative ;
- Interaction avec un rayon gamma -> électron de recul -> nuage ionisé diffus - > faible densité d'états excitation -> faible probabilité d'ATT -> composante lente de la fluorescence émise négligeable. Le document intitulé "Current Status on Plastic Scintillators Modifications" (CHEMISTRY - A EUROPEAN JOURNAL, vol. 20, no. 48, 21 octobre 2014 (2014-10-21), pages 15660-15685) décrit un scintillateur plastique comprenant une matrice polymère et un agent de discrimination entre les neutrons et les rayons gamma. De nombreux composés y sont proposés comme agent de discrimination.

La stratégie la plus communément suivie pour augmenter l'aptitude d'un scintillateur plastique à discriminer les neutrons des rayons gamma consiste à augmenter la concentration du fluorophore primaire dans le scintillateur afin de diminuer la distance entre deux molécules de fluorophore et donc augmenter la probabilité qu'une ATT se produise. Comme les phénomènes d'ATT sont en 1/r⁶, une division par deux de la distance entre deux molécules de fluorophore (ce qui correspond sensiblement à une multiplication de la concentration en fluorophore d'un facteur 4) augmente d'un facteur 64 la probabilité de survenue d'une ATT (cf. G.H.V. Bertrand et al., Nucl. Instrum. Methods Phys. Res. A 2015, 776, 114-128, ci-après référence [1]).

Ainsi, les scintillateurs plastiques aptes à discriminer les neutrons des rayons gamma présentent-ils typiquement plus de 15% massiques de fluorophore primaire pour moins de 85 % massiques de matrice polymère alors que les scintillateurs plastiques qui n'ont pas ou que faiblement cette aptitude comprennent généralement 3 % massiques de fluorophore primaire pour 97 % massiques de matrice polymère.

Dans la perspective de fournir des scintillateurs plastiques aux propriétés de discrimination entre neutrons et rayons gamma optimisées, il serait souhaitable de trouver un moyen d'augmenter l'aptitude d'un scintillateur plastique à discriminer les neutrons des rayons gamma différent de celui qui consiste à charger ce scintillateur en fluorophore primaire.

Or, dans le cadre de leurs recherches, les Inventeurs ont constaté que l'inclusion dans un scintillateur plastique d'au moins un composé de la famille des cyclophanes, qui ne font pas partie des composés ayant été proposés à ce jour comme agents de scintillation, permet justement d'augmenter notablement l'aptitude d'un scintillateur plastique à discriminer les neutrons des rayonnements gamma, par un rapprochement forcé de deux fluorophores et, ce faisant, par une augmentation de la probabilité d'ATT.

Et c'est sur cette constatation expérimentale qu'est basée la présente invention.

### EXPOSÉ DE L'INVENTION

L'invention a donc pour objet l'utilisation dans un scintillateur plastique, comprenant une matrice polymère, d'au moins un cyclophane comme agent de discrimination entre les neutrons et les rayons gamma.

Conformément à l'invention, le cyclophane est avantageusement un composé présentant une structure cyclique qui est formée par au moins deux groupes aromatiques ou hétéroaromatiques et, de préférence, par un nombre pair de groupes aromatiques ou hétéroaromatiques et qui est fermée par au moins deux ponts alkylène -(CH₂)ₙ-, avec n = 2, 3 ou 4 et, de préférence, 2.

Plus encore, on préfère que le cyclophane réponde à la formule générale (I) ci-après : 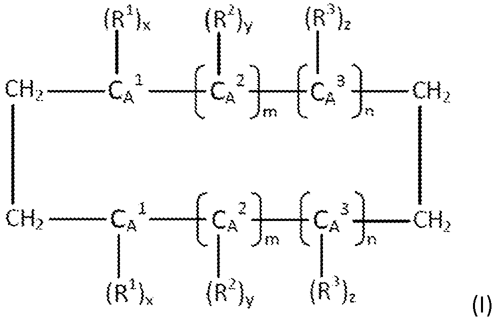 dans laquelle :
C_{A}¹ représente un groupe aromatique ou hétéroaromatique, monocyclique ou polycyclique condensé ;
m et n, identiques ou différents, = 0 ou 1 ;
quand m = 0, C_{A}² est absent tandis que, quand m = 1, C_{A}² représente un groupe aromatique ou hétéroaromatique, monocyclique ou polycyclique condensé ;
quand n = 0, C_{A}³ est absent tandis que, quand n = 1, C_{A}³ représente un groupe aromatique ou hétéroaromatique, monocyclique ou polycyclique condensé ;
x, y et z, identiques ou différents, = 0, 1 ou 2 ;
quand x = 0, R¹ est absent tandis que, quand x = 1 ou 2, R¹ ou chacun des deux R¹ représente un groupe aromatique ou hétéroaromatique ou bien les deux R¹ forment ensemble un pont -(CH₂)₂-;
quand y = 0, R² est absent tandis que, quand y = 1 ou 2, R² ou chacun des deux R² représente un groupe aromatique ou hétéroaromatique ou bien les deux R² forment ensemble un pont -(CH₂)₂- ; et
quand z = 0, R³ est absent tandis que, quand z = 1 ou 2, R³ ou chacun des deux R³ représente un groupe aromatique ou hétéroaromatique ou bien les deux R³ forment ensemble un pont -(CH₂)₂-.

Dans la formule générale (I) ci-avant :
- lorsque x = 2 et que C_{A}¹ comprend deux groupes aromatiques ou hétéro-aromatiques représentés par R¹, alors ces deux groupes aromatiques ou hétéro-aromatiques peuvent être identiques ou différents ;
- lorsque y = 2 et que C_{A}² comprend deux groupes aromatiques ou hétéro-aromatiques représentés par R², alors ces deux groupes aromatiques ou hétéro-aromatiques peuvent être identiques ou différents ; et
- lorsque z = 2 et que C_{A}³ comprend deux groupes aromatiques ou hétéro-aromatiques représentés par R³, alors ces deux groupes aromatiques ou hétéro-aromatiques peuvent être identiques ou différents.

Dans ce qui précède et ce qui suit, on entend par « *groupe aromatique* », un groupe cyclique satisfaisant à la règle de Hückel, c'est-à-dire présentant un nombre d'électrons π délocalisés égal à (4*n* + 2) et par « *groupe hétéroaromatique* », un groupe aromatique tel qu'il vient d'être défini mais comprenant un ou plusieurs hétéroatomes, typiquement O, N ou S.

Comme précédemment indiqué, C_{A}¹ et, le cas échéant, C_{A}² et C_{A}³ représentent, indépendamment les uns des autres, un groupe aromatique ou hétéroaromatique qui peut être :
- monocyclique, c'est-à-dire constitué d'un seul cycle, auquel cas ce cycle est typiquement à 5 ou 6 chaînons, ou
- polycyclique condensé, c'est-à-dire constitué de plusieurs cycles accolés, auquel cas ce polycycle est, de préférence, formé de deux ou trois cycles, typiquement à 5 ou 6 chaînons chacun.

Ainsi, à titre d'exemples de groupes aromatiques ou hétéroaromatiques susceptibles d'être représentés par C_{A}¹ et, le cas échéant, par C_{A}² et/ou CA³, on peut citer les groupes phényle, pyrényle, naphtyle, anthracényle, fluoranthényle, fluorényle, phénanthrényle, furyle, pyrrolyle, thiényle, oxazolyle, pyrazolyle, thiazolyle, imidazolyle, triazolyle, pyridinyle, pyranyle, pyrazinyle, pyrimidinyle, quinoléyle, isoquinoléyle et carbazolyle.

Lorsque R¹, R² et/ou R³ représentent des groupes aromatiques, alors ces groupes peuvent également être monocycliques ou polycycliques condensés mais ne le sont pas nécessairement. Ainsi, le ou les groupes aromatiques ou hétéroaromatiques représentés par R¹, R² et/ou R³ peuvent être, en plus des groupes aromatiques et hétéroaromatiques précités, des groupes aromatiques ou hétéroaromatiques qui sont constitués de plusieurs cycles reliés les uns aux autres par une liaison covalente comme, par exemple, des groupes biphényle, terphényle ou 5-phényloxazolyle.

C_{A}¹ et, le cas échéant, C_{A}² et/ou C_{A}³ représentent, de préférence, un groupe phényle, oxazolyle ou carbazolyle, tandis que R¹, R² et/ou R³ représentent, de préférence, un groupe phényle, biphényle ou 5-phényloxazolyle.

Par ailleurs, on préfère que le cyclophane comprenne 2 ou 3 ponts -(CH₂)₂-. Ainsi, le cyclophane peut notamment être :
1°) un cyclophane du benzène tel que :
   - le cyclophane de formule particulière (I-a) ci-après : 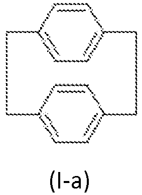 qui répond à la formule générale (I) ci-avant dans laquelle C_{A}¹ représente un groupe phényle, x = 0, m et n = 0, et dans laquelle le cyclophane comprend un premier et un deuxième pont -(CH₂)₂-, les atomes de carbone des groupes phényle formant le deuxième pont -(CH₂)₂- étant en position *para* par rapport aux atomes de carbone des groupes phényle formant le premier pont -(CH₂)₂- ;
   - le cyclophane de formule particulière (I-b) ci-après : 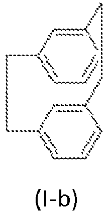 qui répond à la formule générale (I) ci-avant dans laquelle C_{A}¹ représente un groupe phényle, x = 0, m et n = 0, et dans laquelle le cyclophane comprend un premier et un deuxième pont -(CH₂)₂-, les atomes de carbone des groupes phényle formant le deuxième pont -(CH₂)₂- étant en position *méta* par rapport aux atomes de carbone des groupes phényle formant le premier pont -(CH₂)₂- ;
   - le cyclophane de formule particulière (I-c) ci-après : 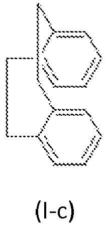 qui répond à la formule générale (I) ci-avant dans laquelle C_{A}¹ représente un groupe phényle, x = 0, m et n = 0, et dans laquelle le cyclophane comporte un premier et un deuxième pont -(CH₂)₂-, les atomes de carbone des groupes phényle formant le deuxième pont -(CH₂)₂- étant en position *ortho* par rapport aux atomes de carbone des groupes phényle formant le premier pont -(CH₂)₂- ;
   - le cyclophane de formule particulière (I-d) ci-après : 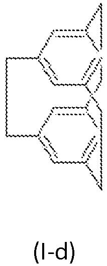 qui répond à la formule générale (I) ci-avant dans laquelle C_{A}¹ représente un groupe phényle, x = 1, les R¹ forment ensemble un pont -(CH₂)₂-, m et n = 0, et dans laquelle le cyclophane comprend un premier, un deuxième et un troisième pont -(CH₂)₂-, les atomes de carbone des groupes phényle formant les deuxième et troisième ponts -(CH₂)₂- étant en position *méta* par rapport aux atomes de carbone des groupes phényle formant le premier pont -(CH₂)₂- ;
   - le cyclophane de formule particulière (I-e) ci-après : 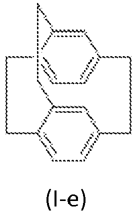 qui répond à la formule générale (I) ci-avant dans laquelle C_{A}¹ représente un groupe phényle, x = 1, les R¹ forment ensemble un pont -(CH₂)₂-, m et n = 0, et dans laquelle le cyclophane comprend un premier, un deuxième et un troisième pont -(CH₂)₂-, les atomes de carbone des groupes phényle formant le deuxième pont -(CH₂)₂- étant en position *para* par rapport aux atomes de carbone des groupes phényle formant le premier pont -(CH₂)₂- et les atomes de carbone des groupes phényle formant le troisième pont -(CH₂)₂- étant en position *ortho* par rapport aux atomes de carbone des groupes phényle formant le premier pont -(CH₂)₂- ;
2°) un cyclophane du biphényle tel que :
   - le cyclophane de formule particulière (I-f) ci-après : 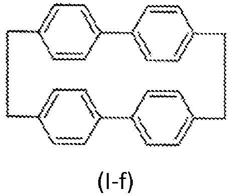 qui répond à la formule générale (I) ci-avant dans laquelle C_{A}¹ représente un groupe phényle, x = 0, m = 1, C_{A}² représente un groupe phényle, y = 0, n = 0, et dans laquelle le cyclophane comprend un premier et un deuxième pont -(CH₂)₂- ;
   - les cyclophanes de formules particulières (I-g), (I-h), (I-i) et (I-j) ci-après : 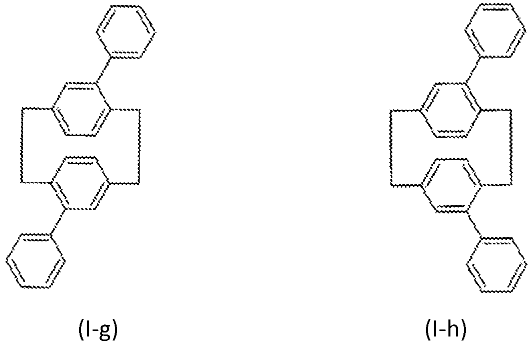 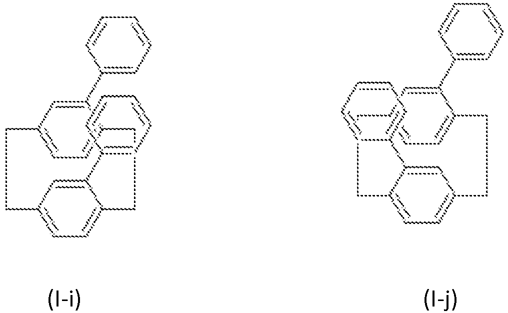 qui répondent à la formule générale (I) ci-avant dans laquelle C_{A}¹ représente un groupe phényle, x = 1, R¹ représente un groupe phényle, m et n = 0, et dans laquelle le cyclophane comprend un premier et un deuxième pont -(CH₂)₂-, les atomes de carbone des groupes phényle formant le deuxième pont -(CH₂)₂- étant en position *para* par rapport aux atomes de carbone des groupes phényle formant le premier pont -(CH₂)₂- ;
3°) un cyclophane du para-terphényle tel que :
   - le cyclophane de formule particulière (I-k) ci-après : 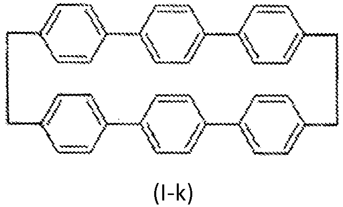 qui répond à la formule générale (I) dans laquelle m = n = 1, C_{A}¹, C_{A}² et C_{A}³ représentent un groupe phényle, x, y et z = 0, et dans laquelle le cyclophane comprend un premier et un deuxième pont -(CH₂)₂- ;
   - les cyclophanes de formules particulières (I-I), (I-m), (I-n) et (I-o) ci-après : 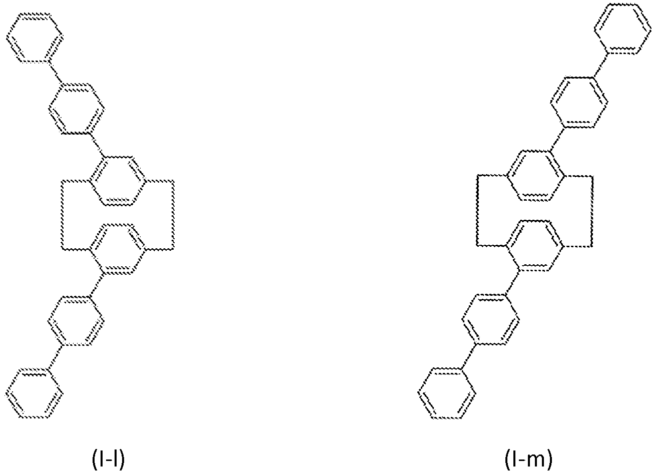 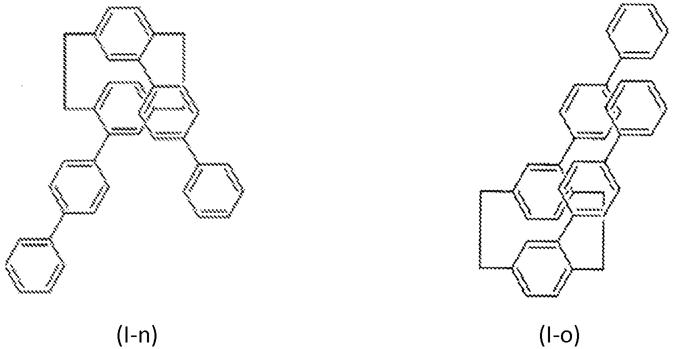 qui répondent à la formule générale (I) dans laquelle C_{A}¹ représente un groupe phényle, x = 1, R¹ représente un groupe biphényle, m et n = 0, et dans laquelle le cyclophane comprend un premier et un deuxième pont -(CH₂)₂-, les atomes de carbone des groupes phényle formant le deuxième pont -(CH₂)₂- étant en position *para* par rapport aux atomes de carbone des groupes phényle formant le premier pont -(CH₂)₂- ;
   - le cyclophane de formule particulière (I-p) ci-après : 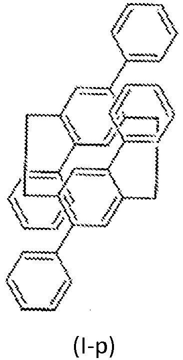 qui répond à la formule générale (I) dans laquelle C_{A}¹ représente un groupe phényle, x = 2, R¹ représente un groupe phényle, m et n = 0, et dans laquelle le cyclophane comprend un premier et un deuxième pont -(CH₂)₂-, les atomes de carbone des groupes phényle formant le deuxième pont -(CH₂)₂- étant en position *para* par rapport aux atomes de carbone des groupes phényle formant le premier pont -(CH₂)₂- ;
4°) un cyclophane du 2,5-diphényloxazole tel que :
   - le cyclophane de formule particulière (I-q) ci-après : 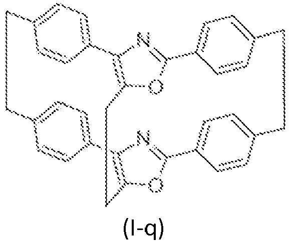 qui répond à la formule générale (I) dans laquelle C_{A}¹ représente un groupe phényle, m = 1, C_{A}² représente un groupe oxazolyle, n = 1, C_{A}³ représente un groupe phényle, x et z = 0, y = 1, les R² forment ensemble un pont -(CH₂)₂-, et dans laquelle le cyclophane comprend un premier, un deuxième et un troisième pont -(CH₂)₂- ;
   - les cyclophanes de formules particulières (I-r) et (I-s) ci-après : 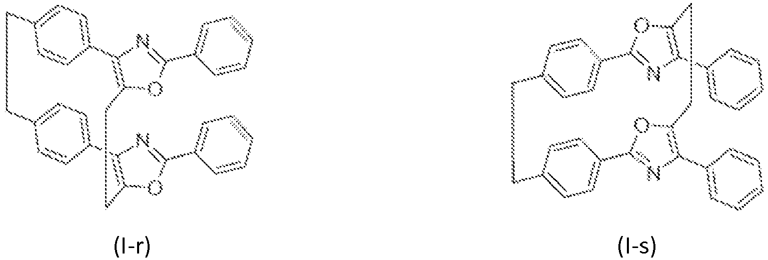 qui répondent à la formule générale (I) dans laquelle C_{A}¹ représente un groupe phényle, x = 0, m = 1, C_{A}² représente un groupe oxazolyle, y = 1, R² représente un groupe phényle, n= 0, et dans laquelle le cyclophane comprend un premier et un deuxième pont -(CH₂)₂- ;
   - les cyclophanes de formules particulières (I-t) et (I-u) ci-après : 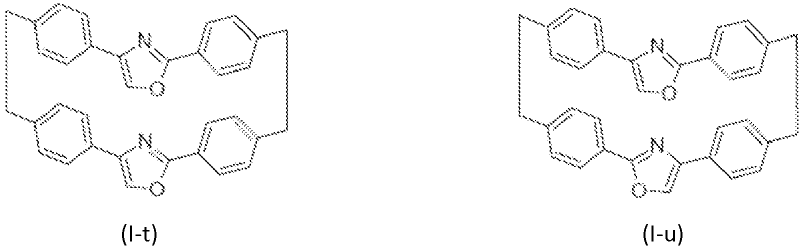 qui répondent à la formule générale (I) dans laquelle C_{A}¹ représente un groupe phényle, x = 0, m = 1, C_{A}² représente un groupe oxazolyle, y = 0, n = 1, C_{A}³ représente un groupe phényle, z = 0, et dans laquelle le cyclophane comprend un premier et un deuxième pont-(CH₂)₂- ;
   - les cyclophanes de formules particulières (I-v) et (I-w) ci-après : 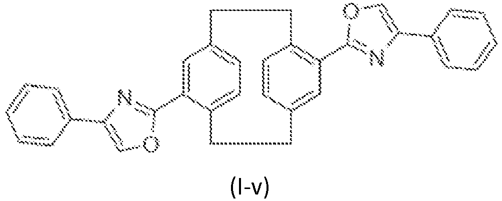 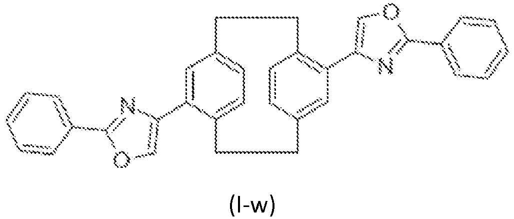 qui répondent à la formule générale (I) dans laquelle C_{A}¹ représente un groupe phényle, x = 1, R¹ représente un groupe 5-phényloxazolyle, m et n = 0, et dans laquelle le cyclophane comprend un premier et un deuxième pont -(CH₂)₂-, les atomes de carbone des groupes phényle formant le deuxième pont -(CH₂)₂- étant en position *para* par rapport aux atomes de carbone des groupes phényle formant le premier pont -(CH₂)₂- ;
5°) un cyclophane du carbazole tel que :
   - les cyclophanes de formules particulières (I-x), (I-y), (I-z), (I-aa) et (I-ab) ci-après : 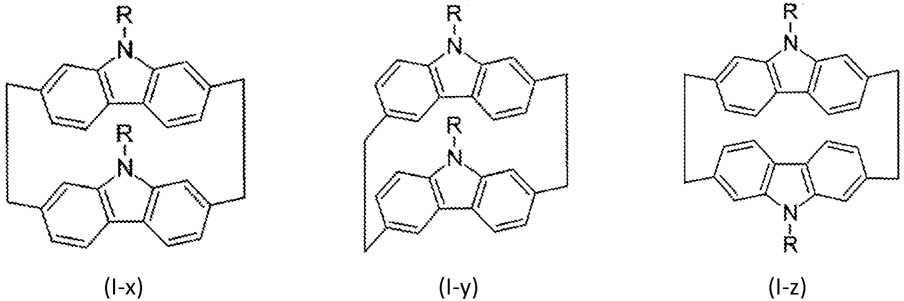 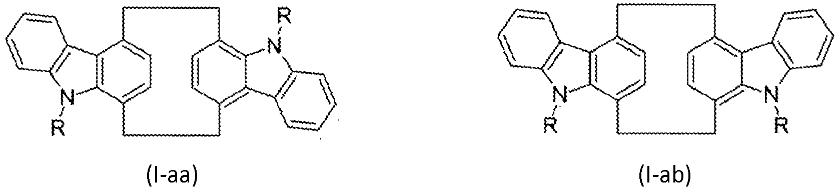 qui répondent à la formule générale (I) dans laquelle C_{A}¹ représente un groupe carbazolyle, x = 1, R représente un atome d'hydrogène ou un groupe R¹ tel que défini dans la formule générale (I), m et n = 0, et dans laquelle le cyclophane comprend un premier et un deuxième pont -(CH₂)₂-;
   - le cyclophane de formule particulière (I-ac) ci-après : 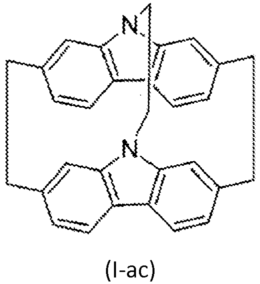 qui répond à la formule générale (I) dans laquelle C_{A}¹ représente un groupe carbazolyle, x = 1, les R¹ forment ensemble un pont -(CH₂)₂-, m et n = 0, et dans laquelle le cyclophane comprend un premier et un deuxième pont -(CH₂)₂-.

Conformément à l'invention, la matrice polymère du scintillateur plastique comprend, de préférence, un polymère issu de la polymérisation radicalaire d'au moins un composé polymérisable comprenant un ou plusieurs groupes choisis parmi les groupes vinyle (c'est-à-dire de formule -CH=CH₂), allyle (c'est-à-dire de formule -CH₂-CH=CH₂) et 1-méthyléthényle (c'est-à-dire de formule -C(CH₃)=CH₂), encore connu sous le nom de groupe pseudoallyle.

Le composé polymérisable peut comprendre au moins un groupe aromatique, monocyclique ou polycyclique, auquel cas le composé polymérisable peut notamment être choisi parmi le styrène, les isomères du méthylstyrène (2-vinyltoluène, 3-vinyltoluène, 4-vinyltoluène et α-méthylstyrène), les isomères du diméthylstyrène (ou vinylxylène, par exemple 2,3-diméthylstyrène, 2,4-diméthylstyrène, 2,5-diméthylstyrène, etc), les isomères du vinylbiphényle (par exemple, 2-vinylbiphényle, 4-vinylbiphényle, etc), les isomères de l'allyltoluène (par exemple, 3-allyltoluène, 4-allyltoluène, etc), les isomères du vinylnaphtalène (par exemple, 1-vinylnaphtalène, 2-vinylnaphtalène, etc) et le *N-*vinylcarbazole.

En variante, le composé polymérisable peut ne comprendre aucun groupe aromatique, auquel cas il peut notamment être choisi parmi l'acide acrylique, l'acide méthacrylique, l'acrylamide, le méthacrylamide, les acrylates d'alkyles ou d'hydroxy-alkyles dont le groupe alkyle, qui peut être linéaire ou ramifié, comprend de 1 à 20 atomes de carbone, et les méthacrylates d'alkyles ou d'hydroxyalkyles dont le groupe alkyle, qui peut être linéaire ou ramifié, comprend de 1 à 20 atomes de carbone.

De manière préférée, le polymère résulte de la polymérisation radicalaire d'un premier composé polymérisable et d'un deuxième composé polymérisable, le premier composé polymérisable étant avantageusement le styrène, le 2-vinyltoluène, le 3-vinyl-toluène ou le 4-vinyltoluène, et le deuxième composé polymérisable étant avantageusement l'acide acrylique ou l'acide méthacrylique.

Conformément à l'invention, le polymère formant la matrice polymère peut être réticulé en vue notamment d'optimiser les propriétés mécaniques du scintillateur plastique, auquel cas ce polymère résulte d'une polymérisation radicalaire réticulante (c'est-à-dire avec réticulation) d'au moins un composé polymérisable tel que précédemment défini, en présence d'un agent de réticulation.

Cet agent de réticulation, qui doit présenter au moins deux groupes polymérisables, est, de préférence, choisi parmi les isomères du divinylbenzène comme le 1,2-divinylbenzène, le 1,3-divinylbenzène ou le 1,4-divinylbenzène, les diacrylates d'alkyles ou d'hydroxyalkyles comprenant un groupe alkyle, linéaire ou ramifié, en C2 à C20, comme le diacrylate de butane-1,3-diyle, et les diméthacrylates d'alkyles ou d'hydroxyalkyles comprenant un groupe alkyle, linéaire ou ramifié, en C2 à C20, comme le diméthacrylate de butane-1,4-diyle.

Parmi ceux-ci, préférence est donnée aux diméthacrylates d'alkyles pour leur transparence et, tout particulièrement, au diméthacrylate de butane-1,4-diyle, ainsi qu'au 1,4-divinylbenzène.

Lorsqu'un agent de réticulation est utilisé, alors celui-ci représente, de préférence, de 0,5 % à 50 % molaires et, mieux encore, de 5 % à 30 % molaires, et encore plus préférentiellement de 5 % à 17 % molaires du mélange formé par le(s) composé(s) polymérisable(s) et cet agent.

Conformément à l'invention, le cyclophane peut être utilisé dans le scintillateur plastique en tant que substitut des fluorophores primaire et secondaire classiquement utilisés dans les scintillateurs plastiques ou en complément de ces fluorophores.

Aussi, le scintillateur plastique peut-il comprendre de plus un fluorophore, auquel cas celui-ci est, de préférence, choisi parmi les composés qui présentent un spectre d'absorption dont l'intensité maximale d'absorption se situe entre 310 nm et 340 nm, un spectre d'émission dont l'intensité maximale d'émission se situe entre 380 nm et 450 nm et un rendement quantique de fluorescence dans un milieu apolaire supérieur à 0,2 et, de préférence, supérieur à 0,5.

À cet égard, on précise que le rendement quantique de fluorescence d'un fluorophore correspond à la proportion de photons de luminescence émis par quantité de photons absorbés par ce fluorophore. Ce rendement peut être mesuré avec une sphère d'intégration en tant que module d'un spectrofluorimètre (cf., par exemple, Rohwer et Martin, J. Lumin. 2005, 115(3-4), 77-90, ci-après référence **[2]**) ou, en l'absence de sphère d'intégration, par mesure relative, c'est-à-dire par rapport à une référence, de l'échantillon, la référence étant alors typiquement une solution de sulfate de quinine (cf., par exemple, Velapoli et Mielenz, Appl. Opt. 1981, 20(9), 1718, ci-après référence **[3]**).

En variante, le scintillateur plastique peut comprendre deux fluorophores, à savoir un premier fluorophore, dit ci-après fluorophore primaire, et un deuxième fluorophore, dit ci-après fluorophore secondaire, dont le spectre d'absorption recouvre au mieux le spectre d'émission du premier fluorophore, et ce, pour optimiser les transferts d'énergie entre les deux fluorophores et, par conséquent, les propriétés de détection du scintillateur plastique.

Selon une première disposition de l'invention :
- le fluorophore primaire est un composé qui présente un spectre d'absorption dont l'intensité maximale d'absorption se situe entre 250 nm et 340 nm, un spectre d'émission dont l'intensité maximale d'émission se situe entre 310 nm et 380 nm et un rendement quantique de fluorescence dans un milieu apolaire supérieur à 0,2 et, de préférence, supérieur à 0,5, tandis que
- le fluorophore secondaire est un composé qui présente un spectre d'absorption dont l'intensité maximale d'absorption se situe entre 330 nm et 400 nm, un spectre d'émission dont l'intensité maximale d'émission se situe entre 380 nm et 450 nm et un rendement quantique de fluorescence dans un milieu apolaire supérieur à 0,2 et, de préférence, supérieur à 0,5.

Ainsi, le fluorophore primaire peut notamment être le 2,5-diphényloxazole (ou PPO), le *para*-terphényle (ou *p*-TP), le *méta*-terphényle (ou *m*-TP), le biphényle, le 2-phényl-5-(4-biphénylyl)-1,3,4-oxadiazole (ou PBD), le 2-(4'-*t*-butylphényl)-5-(4"-biphénylyl)-1,3,4-oxiadiazole (ou butyl-PBD), l'anthracène, le *para*-quaterphényle, le tétraphénylbutadiène, le *N*-éthylcarbazole, le *N*-(2-éthylhexyl)carbazole, le 4-isopropyl-biphényle ou le *para*-sexiphényle.

Parmi ceux-ci, préférence est donnée au PPO, au *para*-terphényle et aux mélanges de ceux-ci.

Conformément à l'invention, le fluorophore primaire peut être lié de manière covalente à la matrice polymère, par exemple *via* la participation à la polymérisation du ou des composés polymérisables destinés à former cette matrice d'un groupe vinyle, allyle ou pseudoallyle qui est porté par le fluorophore primaire. À titre d'exemples d'un tel fluorophore primaire, on peut citer le 1-vinylbiphényle, le 2-vinylbiphényle et le méthacrylate de 9-anthracényle.

Quant au fluorophore secondaire, il peut notamment être le 9,10-diphényl-anthracène, le 1,4-bis(5-phényl-2-oxazolyl)benzène (ou POPOP), le 1,4-bis(4-méthyl-5-phényl-2-oxazolyl)benzène (ou diméthylPOPOP), du bis-méthylstyrylbenzène (ou bis-MSB) ou le 9,10-diphénylanthracène (ou 9,10-DPA).

Parmi ceux-ci, préférence est donnée au POPOP et au 9,10-DPA.

Selon une deuxième disposition de l'invention :
- le fluorophore primaire est un composé tel que précédemment défini, tandis que
- le fluorophore secondaire est un composé qui présente un spectre d'absorption dont l'intensité maximale d'absorption se situe entre 360 nm et 400 nm, un spectre d'émission dont l'intensité maximale d'émission se situe entre 470 nm et 540 nm et un rendement quantique de fluorescence dans un milieu apolaire supérieur à 0,5, auquel cas il peut notamment être la coumarine 6, la coumarine 7, la coumarine 30, la coumarine 102, la coumarine 151, la coumarine 314, la coumarine 334, la coumarine 7 ou la 3-hydroxyflavone.

Selon une troisième disposition de l'invention :
- le fluorophore primaire est un composé tel que précédemment défini, tandis que
- le fluorophore secondaire est un composé qui présente un spectre d'absorption dont l'intensité maximale d'absorption se situe entre 350 nm et 400 nm, un spectre d'émission dont l'intensité maximale démission se situe entre 560 nm et 630 nm et un rendement quantique de fluorescence dans un milieu apolaire supérieur à 0,5, auquel cas il peut notamment être le rouge de Nile, la rhodamine B, un sel de rhodamine B, le 4-(dicyanométhylène)-2-méthyl-6-(4-diméthylaminostyryl)-4*H*-pyrane (ou DCM), le pyrrométhène 580 ou tout composé à noyau pérylènediimide comme le *N,N*'-bis(2,5-di-*tert*-butylphényl)-3,4,9,10-pérylènedicarboximide.

Lorsque le scintillateur plastique ne comprend qu'un fluorophore, alors la masse de ce fluorophore dans le scintillateur plastique est typiquement comprise entre 1 % et 30 % et, mieux encore, entre 20 % et 30 % de la masse du scintillateur plastique.

Lorsque le scintillateur plastique comprend au moins un fluorophore primaire et au moins un fluorophore secondaire, alors la masse du fluorophore primaire dans le scintillateur plastique est typiquement comprise entre 1 % et 30 %, de préférence, entre 2 % et 20 % et, mieux encore, entre 10 % et 20 % de la masse du scintillateur plastique, tandis que la masse du fluorophore secondaire est, elle, typiquement comprise entre 0,002 % et 0,2 % de la masse du scintillateur plastique.

Quant à la masse du cyclophane dans le scintillateur plastique, elle est typiquement comprise entre 0,5 % et 30 %, de préférence entre 1 % et 10% et, mieux encore, entre 2 % et 5 % de la masse du scintillateur plastique.

Sans être liés par aucune théorie, les Inventeurs pensent que la présence d'un ou plusieurs cyclophanes dans un scintillateur plastique aurait, compte-tenu de la structure chimique particulière que présentent ces composés, un triple effet, à savoir : celui d'augmenter la durée des états triplets, celui d'augmenter la mobilité des états triplets et celui d'induire un rapprochement forcé de deux fluorophores, les fluorophores correspondant aux groupes aromatiques ou hétéroaromatiques que comprennent les cyclophanes et le rapprochement forcé étant lié à la rigidité apportée par les ponts alkylène liant ces groupes aromatiques ou hétéroaromatiques.

D'autres avantages et caractéristiques de l'invention apparaîtront à la lecture du complément de description qui suit, qui se réfère aux figures jointes en annexe et qui se rapporte à des exemples de préparation et de caractérisation radiophysique de scintillateurs plastiques comprenant un cyclophane conformément à l'invention.

Il va de soi que ces exemples ne sont donnés qu'à titre d'illustration de l'objet de l'invention et ne constituent en aucun cas une limitation de cet objet.

### BRÈVE DESCRIPTION DES FIGURES

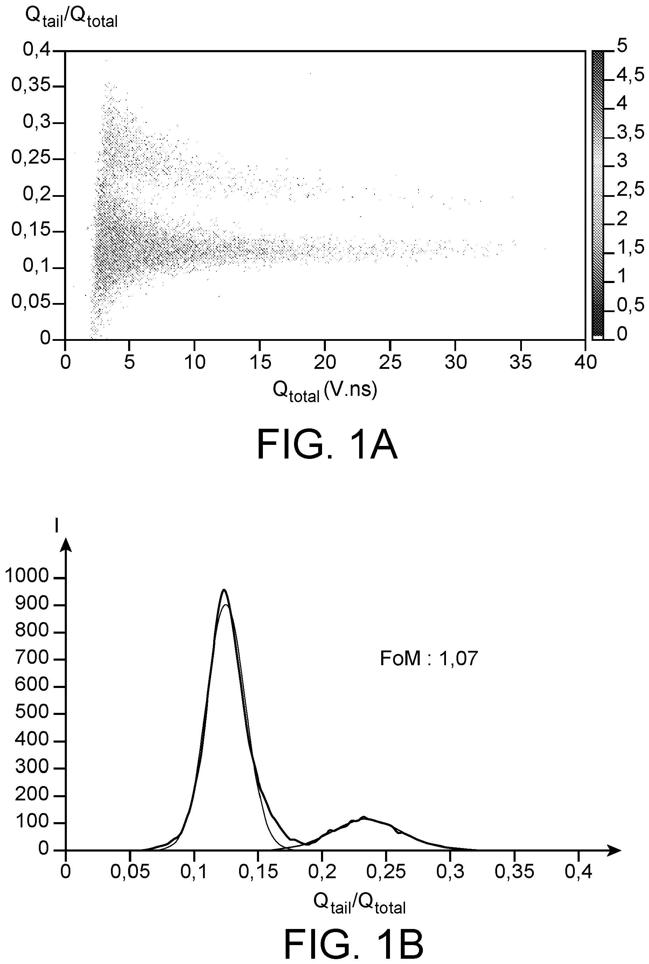

Les figures 1A et 1B illustrent les résultats d'une analyse de discrimination par forme d'impulsion (ou PSD de « *Pulse Shape Discrimination* ») d'un scintillateur plastique comprenant 0,54% massiques de [2,2']*para*-cyclophane ; la figure 1A correspond au diagramme biparamétrique représentant le rapport de la charge de traine sur la charge totale, noté Qₜₐᵢₗ/Qₜₒₜₐₗ, en fonction de la charge totale, notée Qₜₒₜₐₗ et exprimée en V.ns, tandis que la figure 1B correspond à l'histogramme du rapport de charges, Qₜₐᵢₗ/Qₜₒₜₐₗ, tiré de la projection du diagramme de la figure 1A sur l'axe des ordonnées de ce diagramme.

Les figures 2A et 2B sont des figures analogues à celles des figures 1A et 1B mais qui se rapportent à un scintillateur plastique témoin ne différant du scintillateur plastique auquel se rapportent les figures 1A et 1B qu'en ce qu'il ne comprend pas de [2,2']*para-*cyclophane.

La figure 3 illustre correspond à l'histogramme du rapport de charges, Qₜₐᵢₗ/Qₜₒₜₐₗ, tiré de la projection du diagramme biparamétrique sur l'axe des ordonnées de ce diagramme tel qu'obtenu lors d'une analyse PSD d'un scintillateur plastique comprenant 2 % massiques de [2,2']*para*-biphényla-cyclophane ;

La figure 4 est une figure analogue à celle de la figure 3 mais qui se rapporte à un scintillateur plastique témoin ne différant du scintillateur auquel se rapporte la figure 3 qu'en ce qu'il ne comprend pas de [2,2']*para*-biphényla-cyclophane.

### EXPOSÉ DÉTAILLÉ DE MODES DE MISE EN ŒUVRE PARTICULIERS

### I - Préparation et caractérisation radiophysique d'un premier scintillateur plastique de l'invention :

On prépare un premier scintillateur plastique - ci-après scintillateur S1 - à partir de la composition suivante :
- monomère styrène : 9,04 g (9,95 mL) ;
- diméthacrylate de butane-1,4-diyle en tant qu'agent réticulant : 2,3 g (2,25 mL) ;
- 2,5-diphényloxazole (ou PPO) en tant que fluorophore primaire : 3,4 g ;
- 9,10-diphénylanthracène (ou 9,10-DPA) en tant que fluorophore secondaire : 11 mg ; et
- [2,2']*para*-cyclophane (composé de formule particulière (I-a)) : 184 mg.

Pour ce faire, le PPO, le 9,10-DPA et le [2,2']*para*-cyclophane sont introduits dans un ballon rodé auquel sont ensuite ajoutés le styrène et le diméthacrylate de butane-1,4-diyle. Une fois le mélange homogénéisé, celui-ci subit 5 cycles de congélations/dégazages successifs (congélation à l'azote liquide sous vide, puis redescente à température ambiante). Le retour à la pression atmosphérique est réalisé sous argon. Le mélange est ensuite transféré dans un moule, préalablement nettoyé et chauffé à 110 °C pour enlever toutes les impuretés et les traces d'humidité. Le moule, une fois rempli est scellé et placé dans un four ventilé, à 80 °C pendant 14 jours. Après quoi, le moule est ramené à la température ambiante. Son contenu est libéré par pression mécanique, puis usiné et poli pour obtenir le scintillateur S1 sous la forme d'un cylindre à la surface la plus lisse possible.

Le scintillateur S1 est soumis à une analyse PSD.

Pour ce faire, le scintillateur S1 est irradié par une source émettant à la fois des neutrons et des rayons γ, en l'espèce par une source de ²⁵²Californium. Suite à cette irradiation, des photons de scintillation sont créés au sein du scintillateur puis collectés, amplifiés et convertis en impulsions électroniques par le photomultiplicateur. Ces impulsions sont ensuite numérisées en signaux numériques par des appareils d'électronique de mesure (carte électronique programmable dédiée ou numériseur commercial). Finalement, les signaux numériques subissent un algorithme de traitement du signal spécifique à la PSD.

La PSD repose sur la différence entre l'interaction *n*/scintillateur et γ/scintihateur, résultant en une forme d'impulsion temporellement plus large pour l'interaction *n*/scintillateur (selon la théorie de Voltz et Laustriat). On peut ainsi tracer un diagramme biparamétrique représentant le quotient de la charge de traine, noté Qₜₐᵢₗ, correspondant à la fin de l'impulsion sur la charge totale, notée Qₜₒₜₐₗ, correspondant à la totalité de l'impulsion en fonction de la charge totale Qₜₒₜₐₗ. Ce diagramme biparamétrique permet de faire émerger des zones de regroupement des impulsions issues d'interactions *n*/scintillateur (lobe du haut pour les neutrons) et y/scintillateur (lobe du bas).

La projection du rapport de charges Qₜₐᵢₗ/Qₜₒₜₐₗ du diagramme biparamétrique ainsi obtenu sur l'axe des ordonnées de ce diagramme permet d'accéder par ajustement gaussien au facteur de mérite (ou FoM), lequel représente la capacité d'un scintillateur à séparer le lobe des neutrons de celui des rayons gamma.

Les résultats de l'analyse PSD du scintillateur S1 sont illustrés sur les figures 1A et 1B, la figure 1A correspondant au diagramme biparamétrique et la figure 1B correspondant à l'histogramme du rapport de charges, Qₜₐᵢₗ/Qₜₒₜₐₗ, obtenu par projection de ce diagramme sur l'axe des ordonnées pour l'ensemble des Qₜₒₜₐₗ.

Comme le montre la figure 1B, le scintillateur S1 présente un FoM de 1,07.

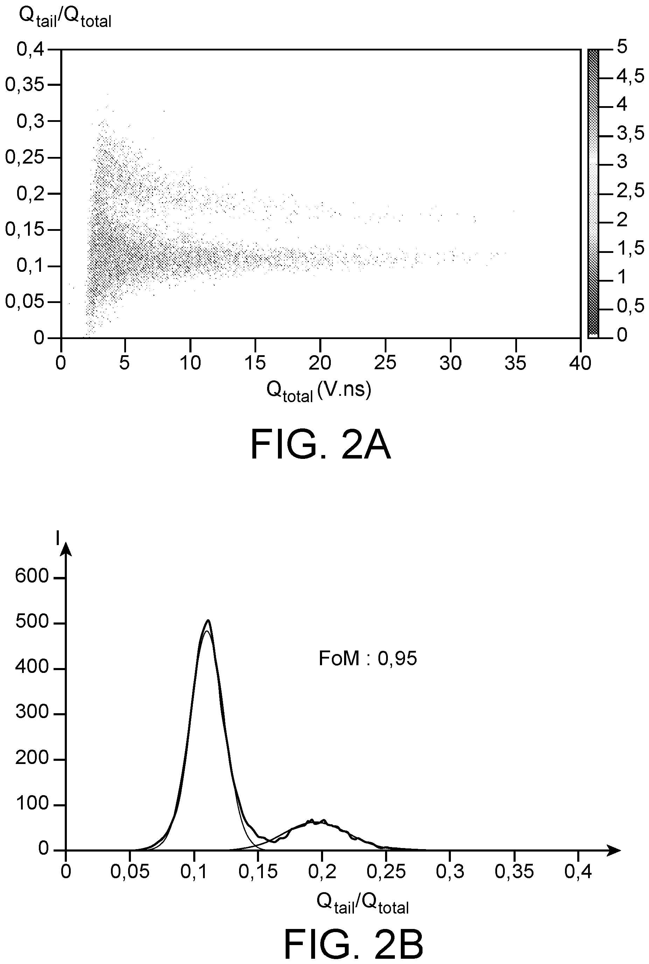

À titre de comparaison, le FoM obtenu pour un scintillateur plastique ne différant du scintillateur S1 qu'en ce qu'il ne comprend pas de [2,2']*para*-cyclophane n'est que 0,95 (cf. figure 2B).

Ainsi, la présence de [2,2']*para*-cyclophane à hauteur de 0,54% massiques dans un scintillateur plastique permet d'améliorer le facteur de mérite de 11 %.

### Il - Préparation et caractérisation photophysique d'un deuxième scintillateur plastique de l'invention :

On prépare un deuxième scintillateur plastique - ci-après scintillateur S2 - à partir de la composition suivante :
- monomère styrène : 3,34 g (3,68 mL) ;
- diméthacrylate de butane-1,4-diyle en tant qu'agent réticulant : 0,83 g (0,81 mL) ;
- biphényle en tant que fluorophore primaire : 720 mg ;
- 1,4-bis(5-phényl-2-oxazolyl)benzène (ou POPOP) en tant que fluorophore secondaire : 0,8 mg ; et
- [2,2']*para*-biphényla-cyclophane (composé de formule particulière (I-f)) : 100 mg.

Le scintillateur 2 est préparé en suivant un protocole similaire à celui décrit au point I ci-avant pour la préparation du scintillateur 1, puis soumis à une analyse PSD, également dans les mêmes conditions que celles de l'analyse PSD du scintillateur S1.

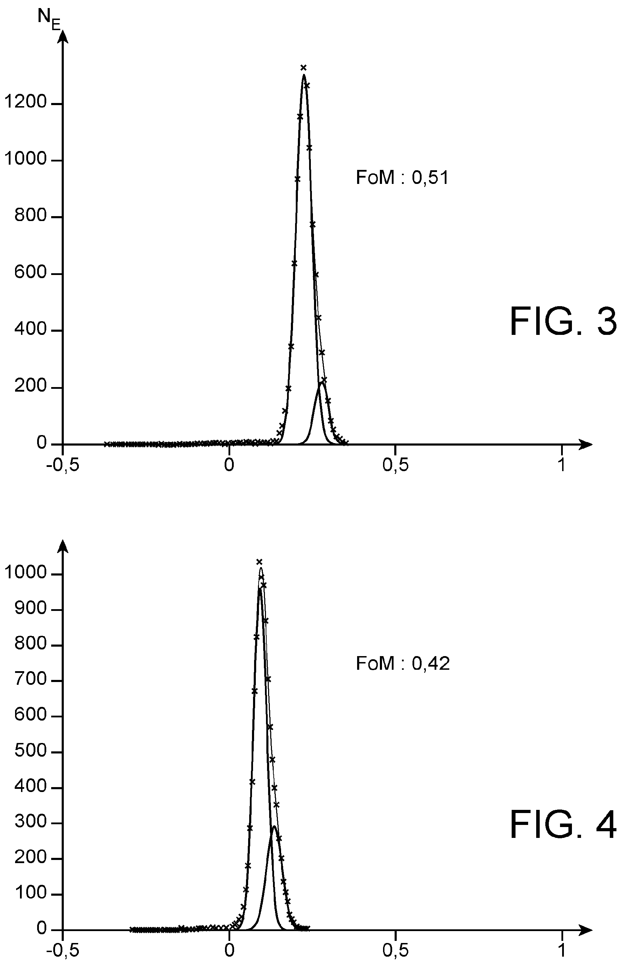

Comme le montre la figure 3, le scintillateur S2 présente un FoM de 0,51.

À titre de comparaison, la FoM obtenue pour un scintillateur plastique ne se différenciant du scintillateur S2 qu'en ce qu'il ne comprend pas de [2,2']*para*-biphényla-cyclophane n'est que 0,42 (cf. figure 4).

Ainsi, la présence de [2,2']*para*-biphényla-cyclophane à hauteur de 2 % massiques dans un scintillateur plastique permet d'améliorer le facteur de mérite de 6 %.

### RÉFÉRENCES CITÉES

[1] G.H.V. Bertrand et al., Nucl. Instrum. Methods Phys. Res. A 2015, 776, 114-128
**[2]** Rohwer et Martin, J. Lumin. 2005, 115(3-4), 77-90
[3] Velapoli et Mielenz, Appl. Opt. 1981, 20(9), 1718

## Revendications

1. Utilisation d'au moins un cyclophane dans un scintillateur plastique, comprenant une matrice polymère, comme agent de discrimination entre les neutrons et les rayons gamma.

2. Utilisation selon la revendication 1, dans laquelle le cyclophane est un composé présentant une structure cyclique qui est formée par au moins deux cycles aromatiques ou hétéroaromatiques et qui est fermée par au moins deux ponts alkylène -(CH₂)ₙ₋, avec n = 2, 3 ou 4, et, de préférence, 2.

3. Utilisation selon la revendication 1 ou la revendication 2, dans laquelle le cyclophane répond à la formule générale (I) : 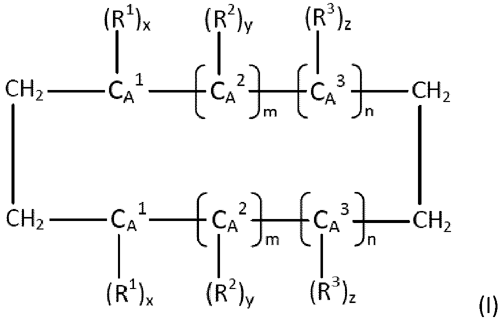 dans laquelle :
C_{A}¹ représente un groupe aromatique ou hétéroaromatique, monocyclique ou polycyclique condensé ;
m et n, identiques ou différents, = 0 ou 1 ;
quand m = 1, C_{A}² représente un groupe aromatique ou hétéroaromatique, monocyclique ou polycyclique condensé ;
quand n = 1, C_{A}³ représente un groupe aromatique ou hétéroaromatique, monocyclique ou polycyclique condensé ;
x, y et z, identiques ou différents, = 0, 1 ou 2 ;
quand x = 1 ou 2, R¹ ou chacun des deux R¹ représente un groupe aromatique ou hétéroaromatique ou bien les deux R¹ forment ensemble un pont -(CH₂)₂-;
quand y = 1 ou 2, R² ou chacun des deux R² représente un groupe aromatique ou hétéroaromatique ou bien les deux R² forment ensemble un pont -(CH₂)₂- ; et
quand z = 1 ou 2, R³ ou chacun des deux R³ représente un groupe aromatique ou hétéroaromatique ou bien les deux R³ forment ensemble un pont -(CH₂)₂-.

4. Utilisation selon la revendication 3, dans laquelle C_{A}¹ et, le cas échéant, C_{A}² et/ou C_{A}³ représentent un groupe phényle, pyrényle, naphtyle, anthracényle, fluoranthényle, fluorényle, phénanthrényle, furyle, pyrrolyle, thiényle, oxazolyle, pyrazolyle, thiazolyle, imidazolyle, triazolyle, pyridinyle, pyranyle, pyrazinyle, pyrimidinyle, quinoléinyle, isoquinoléinyle ou carbazolyle, de préférence un groupe phényle, oxazolyle ou carbazolyle.

5. Utilisation selon la revendication 3 ou la revendication 4, dans laquelle R¹, R² et/ou R³ représentent un groupe phényle, biphényle, terphényle, pyrényle, naphtyle, anthracényle, fluoranthényle, fluorényle, phénanthrényle, furyle, pyrrolyle, thiényle, oxazolyle, pyrazolyle, thiazolyle, imidazolyle, triazolyle, pyridinyle, pyranyle, pyrazinyle, pyrimidinyle, quinoléinyle, isoquinoléinyle ou carbazolyle ou 5-phényloxazolyle, de préférence un groupe phényle, biphényle ou 5-phényloxazolyle.

6. Utilisation selon l'une quelconque des revendications 3 à 5, dans laquelle le cyclophane comprend deux ou trois ponts -(CH₂)₂-.

7. Utilisation selon l'une quelconque des revendications 3 à 6, dans laquelle le cyclophane répond à l'une des formules particulières (I-a) à (I-ac) :

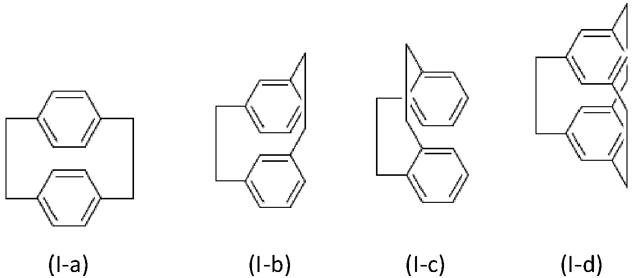

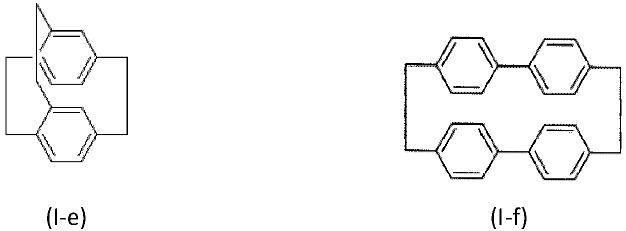

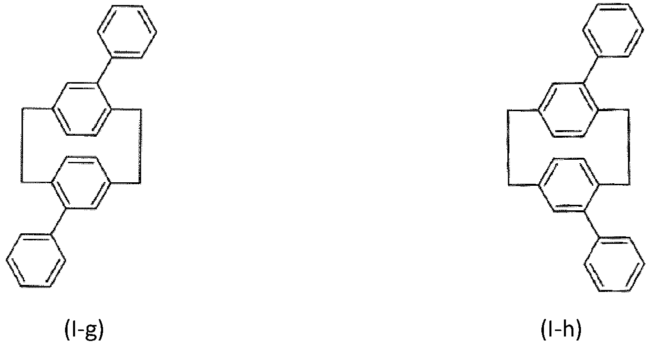

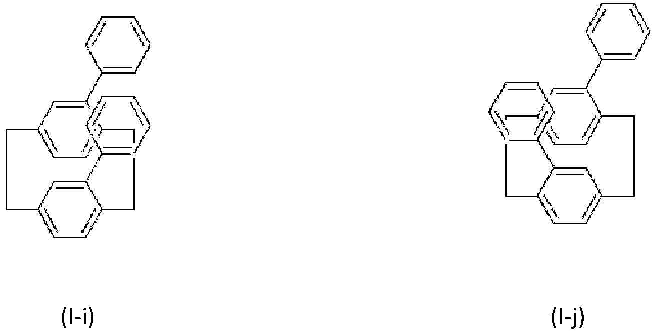

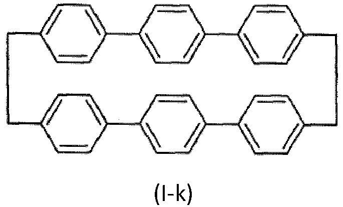

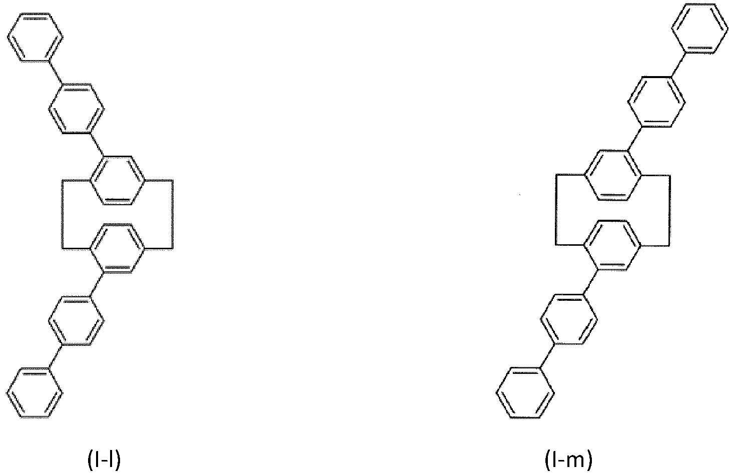

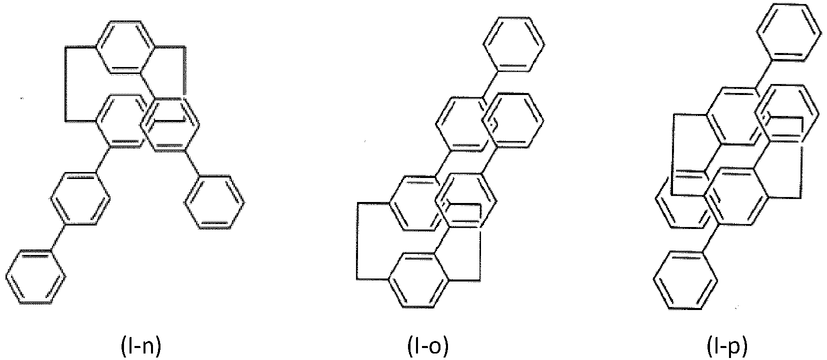

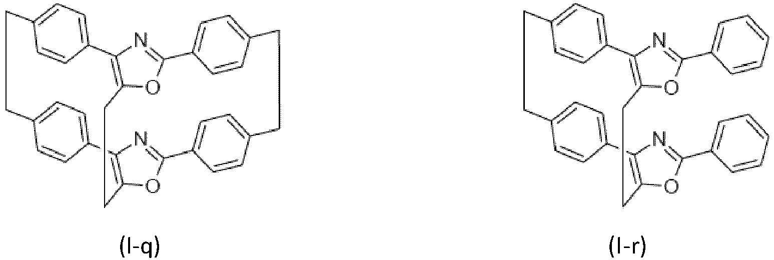

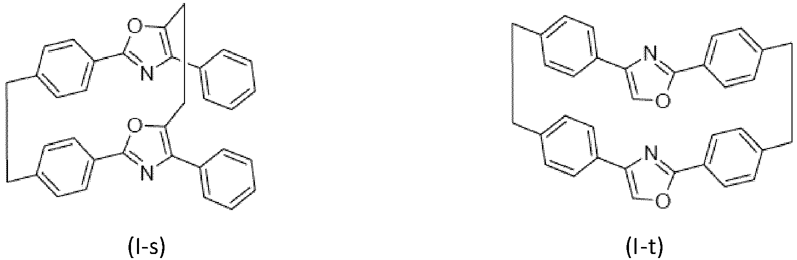

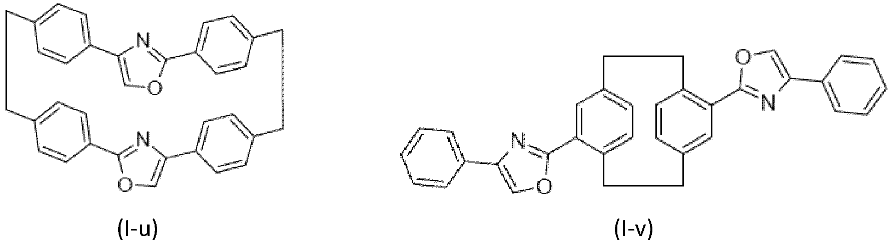

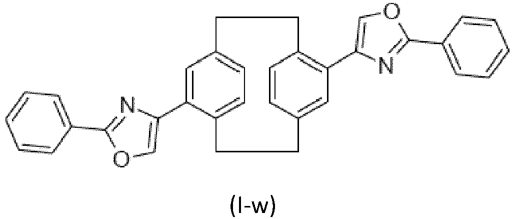

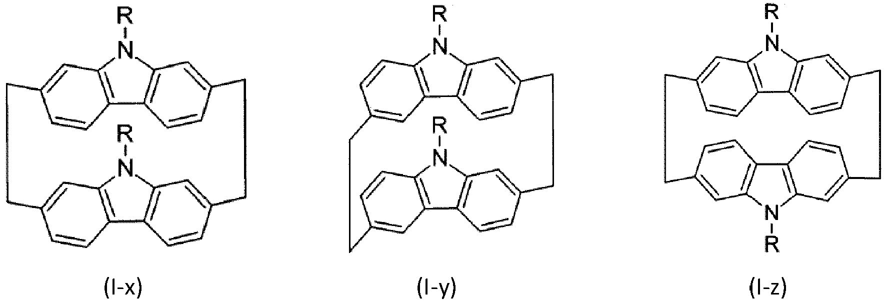

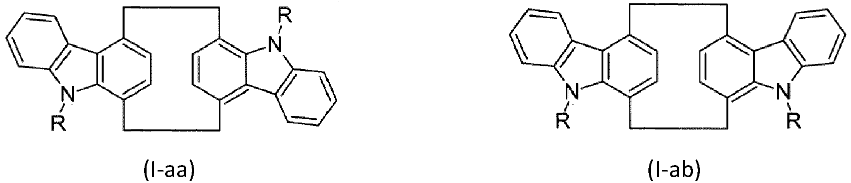

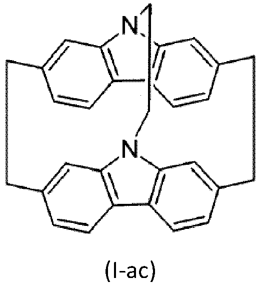

8. Utilisation selon l'une quelconque des revendications 1 à 7, dans laquelle la matrice polymère comprend un polymère résultant d'une polymérisation radicalaire d'au moins un composé polymérisable comprenant au moins un groupe vinyle, allyle ou 1-méthyl-éthényle.

9. Utilisation selon l'une quelconque des revendications 1 à 7, dans laquelle la matrice polymère comprend un polymère résultant d'une polymérisation radicalaire réticulante d'au moins un composé polymérisable comprenant au moins un groupe vinyle, allyle ou 1-méthyl-éthényle, en présence d'un agent de réticulation.

10. Utilisation selon la revendication 8 ou la revendication 9, dans laquelle le composé polymérisable est le styrène, un isomère du méthylstyrène, un isomère du diméthylstyrène, un isomère du vinylbiphényle, un isomère de l'allyltoluène, un isomère du vinylnaphtalène, le *N*-vinylcarbazole, l'acide acrylique, l'acide méthacrylique, l'acrylamide, le méthacrylamide, un acrylate d'alkyle ou d'hydroxyalkyle comprenant un groupe alkyle, linéaire ou ramifié, en C1 à C20 ou un méthacrylate d'alkyle ou d'hydroxyalkyle comprenant un groupe alkyle, linéaire ou ramifié, en C1 à C20.

11. Utilisation selon l'une quelconque des revendications 8 à 10, dans laquelle le polymère résulte de la polymérisation radicalaire d'un premier composé polymérisable, de préférence le styrène, le 2-vinyltoluène, le 3-vinyltoluène ou le 4-vinyltoluène, et d'un deuxième composé polymérisable, de préférence l'acide acrylique ou l'acide méthacrylique.

12. Utilisation selon l'une quelconque des revendications 1 à 11, dans laquelle le scintillateur plastique comprend de plus au moins un premier fluorophore et au moins un deuxième fluorophore et dans laquelle :
- le premier fluorophore présente un spectre d'absorption dont l'intensité maximale d'absorption est entre 250 nm et 340 nm, un spectre d'émission dont l'intensité maximale d'émission est entre 310 nm et 380 nm et un rendement quantique de fluorescence dans un milieu apolaire supérieur à 0,2, et
- le deuxième fluorophore présente un spectre d'absorption dont l'intensité maximale d'absorption est entre 330 nm et 400 nm, un spectre d'émission dont l'intensité maximale d'émission est entre 380 nm et 450 nm et un rendement quantique de fluorescence dans un milieu apolaire supérieur à 0,2.

13. Utilisation selon l'une quelconque des revendications 1 à 11, dans laquelle le scintillateur plastique comprend de plus au moins un premier fluorophore et au moins un deuxième fluorophore et dans laquelle :
- le premier fluorophore présente un spectre d'absorption dont l'intensité maximale d'absorption est entre 250 nm et 340 nm, un spectre d'émission dont l'intensité maximale d'émission est entre 310 nm et 380 nm et un rendement quantique de fluorescence dans un milieu apolaire supérieur à 0,2, et
- le deuxième fluorophore présente un spectre d'absorption dont l'intensité maximale d'absorption est entre 360 nm et 400 nm, un spectre d'émission dont l'intensité maximale d'émission est entre 470 nm et 540 nm et un rendement quantique de fluorescence dans un milieu apolaire supérieur à 0,5.

14. Utilisation selon l'une quelconque des revendications 1 à 11, dans laquelle le scintillateur plastique comprend de plus au moins un premier fluorophore et au moins un deuxième fluorophore et dans lequel :
- le premier fluorophore présente un spectre d'absorption dont l'intensité maximale d'absorption est entre 250 nm et 340 nm, un spectre d'émission dont l'intensité maximale d'émission est entre 310 nm et 380 nm et un rendement quantique de fluorescence dans un milieu apolaire supérieur à 0,2, et
- le deuxième fluorophore présente un spectre d'absorption dont l'intensité maximale d'absorption est entre 350 nm et 400 nm, un spectre d'émission dont l'intensité maximale démission est entre 560 nm et 630 nm et un rendement quantique de fluorescence dans un milieu apolaire supérieur à 0,5.

15. Utilisation selon l'une quelconque des revendications 1 à 14, dans laquelle la masse du cyclophane est comprise entre 0,5 % et 30% de la masse du scintillateur plastique.

## Patentansprüche

1. Verwendung von mindestens einem Cyclophan in einem Kunststoff-Szintillator, der eine Polymermatrix umfasst, als Mittel zur Unterscheidung zwischen Neutronen und Gammastrahlen.

2. Verwendung nach Anspruch 1, wobei es sich bei dem Cyclophan um eine Verbindung mit einer cyclischen Struktur handelt, die von mindestens zwei aromatischen oder heteroaromatischen Cyclen gebildet wird und die durch mindestens zwei -(CH₂)ₙ-Alkylenbrücken geschlossen ist, wobei n = 2, 3 oder 4, und vorzugsweise 2.

3. Verwendung nach Anspruch 1 oder Anspruch 2, wobei das Cyclophan der allgemeinen Formel (I) entspricht: 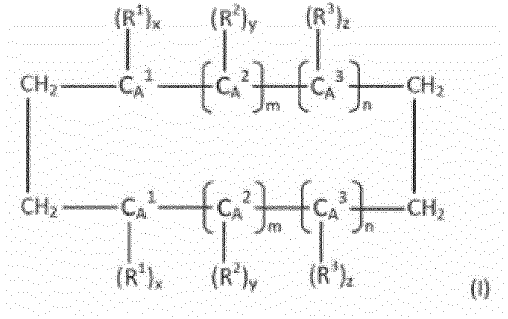 wobei:
C_{A}¹ eine aromatische oder heteroaromatische, monocyclische oder kondensierte polycyclische Gruppe darstellt;
m und n, gleich oder verschieden, = 0 oder 1;
wenn m = 1, C_{A}² eine aromatische oder heteroaromatische, monocyclische oder kondensierte polycyclische Gruppe darstellt;
wenn n = 1, C_{A}³ eine aromatische oder heteroaromatische, monocyclische oder kondensierte polycyclische Gruppe darstellt;
x, y und z, gleich oder verschieden, = 0, 1 oder 2;
wenn x = 1 oder 2, R¹ oder jedes der zwei R¹ eine aromatische oder heteroaromatische Gruppe darstellt, oder aber die zwei R¹ zusammen eine -(CH₂)₂-Brücke bilden;
wenn y = 1 oder 2, R² oder jedes der zwei R² eine aromatische oder heteroaromatische Gruppe darstellt, oder aber die zwei R² zusammen eine -(CH₂)₂-Brücke bilden; und
wenn z = 1 oder 2, R³ oder jedes der zwei R³ eine aromatische oder heteroaromatische Gruppe darstellt, oder aber die zwei R³ zusammen eine -(CH₂)₂-Brücke bilden.

4. Verwendung nach Anspruch 3, wobei C_{A}¹ und gegebenenfalls C_{A}² und/oder C_{A}³ eine Phenyl-, Pyrenyl-, Naphthyl-, Anthracenyl-, Fluoranthenyl-, Fluorenyl-, Phenanthrenyl-, Furyl-, Pyrrolyl-, Thienyl-, Oxazolyl-, Pyrazolyl-, Thiazolyl-, Imidazolyl-, Triazolyl-, Pyridinyl-, Pyranyl-, Pyrazinyl-, Pyrimidinyl-, Chinolinyl-, Isochinolinyl- oder Carbazolyl-Gruppe, vorzugsweise eine Phenyl-, Oxazolyl- oder Carbazolyl-Gruppe darstellen.

5. Verwendung nach Anspruch 3 oder Anspruch 4, wobei R¹, R² und/oder R³ eine Phenyl-, Biphenyl-, Terphenyl-, Pyrenyl-, Naphthyl-, Anthracenyl-, Fluoranthenyl-, Fluorenyl-, Phenanthrenyl-, Furyl-, Pyrrolyl-, Thienyl-, Oxazolyl-, Pyrazolyl-, Thiazolyl-, Imidazolyl-, Triazolyl-, Pyridinyl-, Pyranyl-, Pyrazinyl-, Pyrimidinyl-, Chinolinyl-, Isochinolinyl- oder Carbazolyl- oder 5-Phenyloxazolyl-Gruppe, vorzugsweise eine Phenyl-, Biphenyl- oder 5-Phenyloxazolyl-Gruppe darstellen.

6. Verwendung nach einem der Ansprüche 3 bis 5, wobei das Cyclophan zwei oder drei -(CH₂)₂- Brücken umfasst.

7. Verwendung nach einem der Ansprüche 3 bis 6, wobei das Cyclophan einer der besonderen Formeln (I-a) bis (I-ac) entspricht:

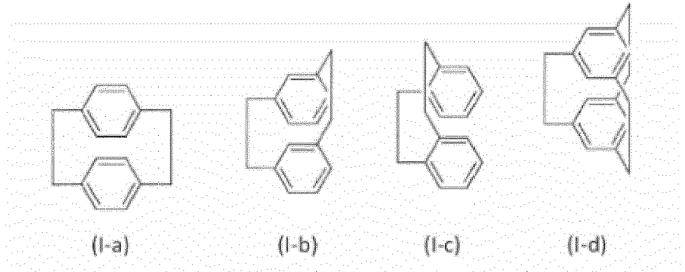

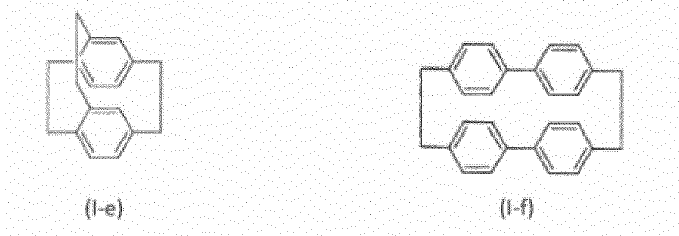

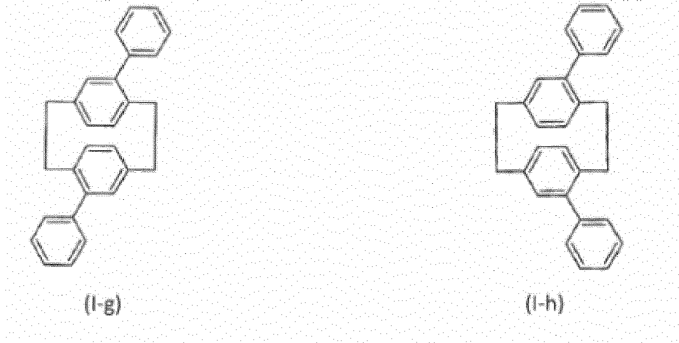

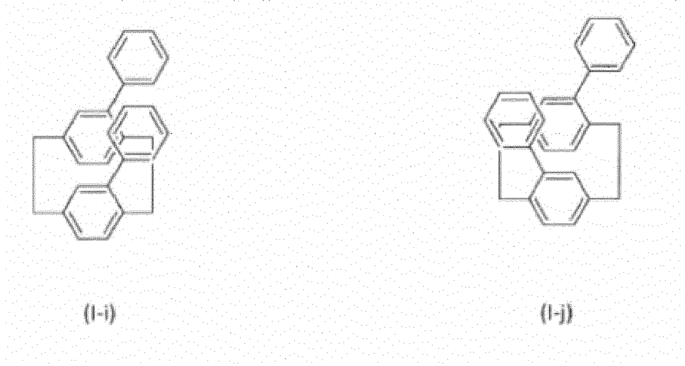

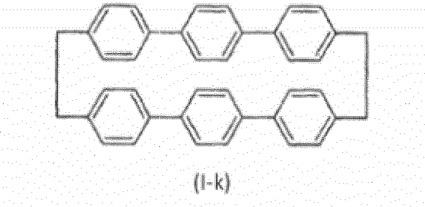

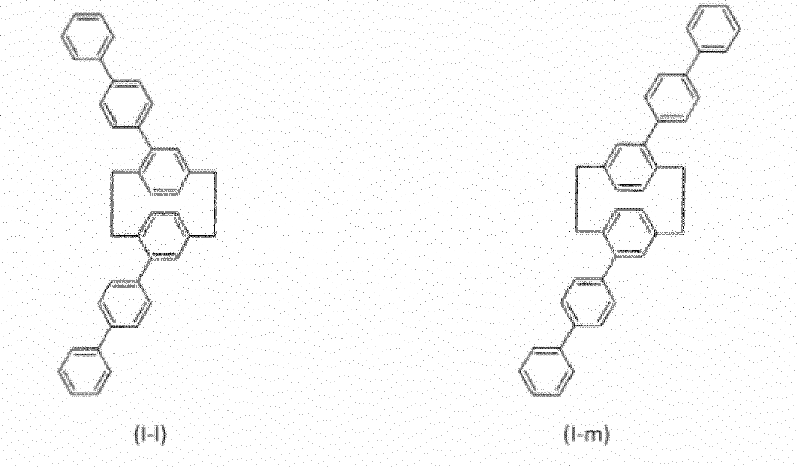

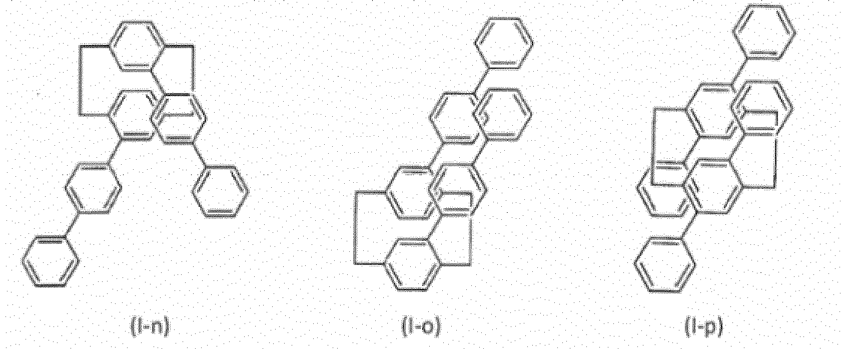

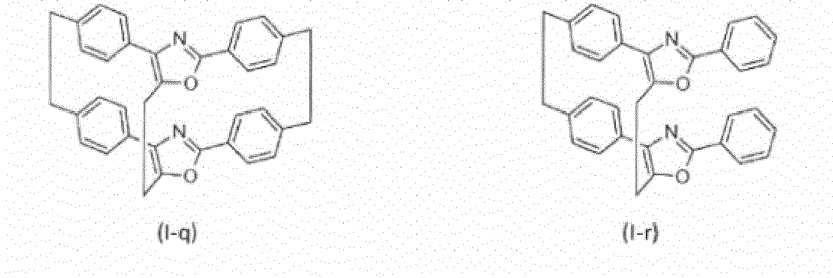

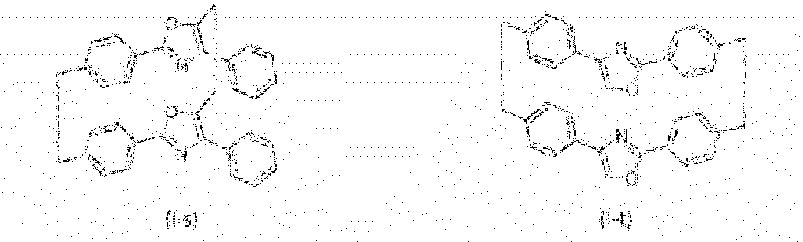

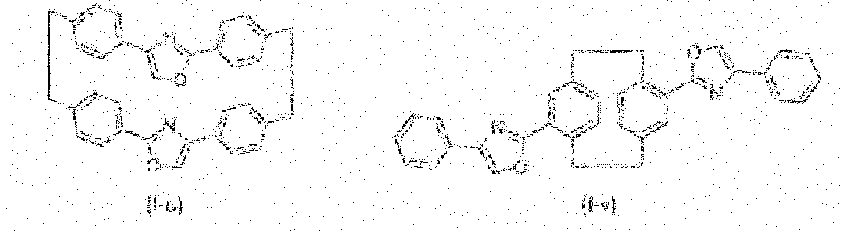

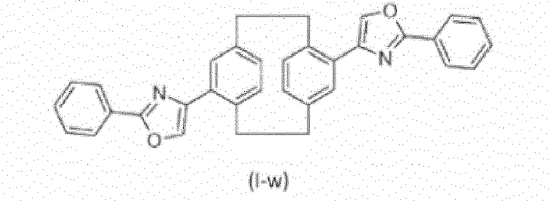

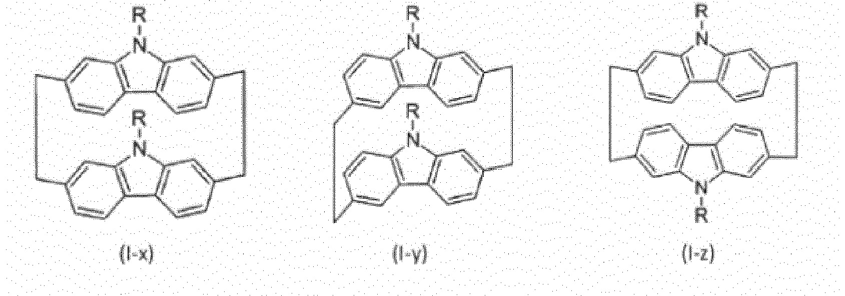

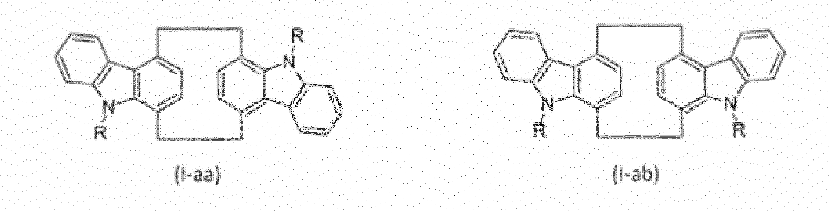

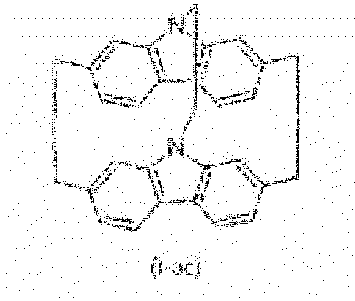

8. Verwendung nach einem der Ansprüche 1 bis 7, wobei die Polymermatrix ein Polymer umfasst, das aus einer radikalischen Polymerisation von mindestens einer polymerisierbaren Verbindung, welche mindestens eine Vinyl-, Allyl- oder 1-Methylethenyl-Gruppe umfasst, resultiert.

9. Verwendung nach einem der Ansprüche 1 bis 7, wobei die Polymermatrix ein Polymer umfasst, das aus einer vernetzenden radikalischen Polymerisation von mindestens einer polymerisierbaren Verbindung, welche mindestens eine Vinyl-, Allyl- oder 1-Methylethenyl-Gruppe umfasst, in Gegenwart eines Vernetzungsmittels resultiert.

10. Verwendung nach Anspruch 8 oder Anspruch 9, wobei es sich bei der polymerisierbaren Verbindung um Styrol, ein Isomer von Methylstyrol, ein Isomer von Dimethylstyrol, ein Isomer von Vinylbiphenyl, ein Isomer von Allyltoluol, ein Isomer von Vinylnaphthalin, *N*-Vinylcarbazol, Acrylsäure, Methacrylsäure, Acrylamid, Methacrylamid, ein Alkyl- oder Hydroxyalkyl-Acrylat, das eine lineare oder verzweigte C1- bis C20-Alkylgruppe umfasst, oder ein Alkyl- oder Hydroxyalkyl-Methacrylat, das eine lineare oder verzweigte C1- bis C20-Alkylgruppe umfasst, handelt.

11. Verwendung nach einem der Ansprüche 8 bis 10, wobei das Polymer aus der radikalischen Polymerisation einer ersten polymerisierbaren Verbindung, vorzugsweise Styrol, 2-Vinyltoluol, 3-Vinyltoluol oder 4- Vinyltoluol, und einer zweiten polymerisierbaren Verbindung, vorzugsweise Acrylsäure oder Methacrylsäure, resultiert.

12. Verwendung nach einem der Ansprüche 1 bis 11, wobei der Kunststoff-Szintillator weiter mindestens einen ersten Fluorophor und mindestens einen zweiten Fluorophor umfasst, und wobei:
- der erste Fluorophor ein Absorptionsspektrum, dessen maximale Absorptionsintensität zwischen 250 nm und 340 nm liegt, ein Emissionsspektrum, dessen maximale Emissionsintensität zwischen 310 nm und 380 nm liegt, und eine Fluoreszenzquantenausbeute in einem unpolaren Medium von größer als 0,2 aufweist, und
- der zweite Fluorophor ein Absorptionsspektrum, dessen maximale Absorptionsintensität zwischen 330 nm und 400 nm liegt, ein Emissionsspektrum, dessen maximale Emissionsintensität zwischen 380 nm und 450 nm liegt, und eine Fluoreszenzquantenausbeute in einem unpolaren Medium von größer als 0,2 aufweist.

13. Verwendung nach einem der Ansprüche 1 bis 11, wobei der Kunststoff-Szintillator weiter mindestens einen ersten Fluorophor und mindestens einen zweiten Fluorophor umfasst, und wobei:
- der erste Fluorophor ein Absorptionsspektrum, dessen maximale Absorptionsintensität zwischen 250 nm und 340 nm liegt, ein Emissionsspektrum, dessen maximale Emissionsintensität zwischen 310 nm und 380 nm liegt, und eine Fluoreszenzquantenausbeute in einem unpolaren Medium von größer als 0,2 aufweist, und
- der zweite Fluorophor ein Absorptionsspektrum, dessen maximale Absorptionsintensität zwischen 360 nm und 400 nm liegt, ein Emissionsspektrum, dessen maximale Emissionsintensität zwischen 470 nm und 540 nm liegt, und eine Fluoreszenzquantenausbeute in einem unpolaren Medium von größer als 0,5 aufweist.

14. Verwendung nach einem der Ansprüche 1 bis 11, wobei der Kunststoff-Szintillator weiter mindestens einen ersten Fluorophor und mindestens einen zweiten Fluorophor umfasst, und wobei:
- der erste Fluorophor ein Absorptionsspektrum, dessen maximale Absorptionsintensität zwischen 250 nm und 340 nm liegt, ein Emissionsspektrum, dessen maximale Emissionsintensität zwischen 310 nm und 380 nm liegt, und eine Fluoreszenzquantenausbeute in einem unpolaren Medium von größer als 0,2 aufweist, und
- der zweite Fluorophor ein Absorptionsspektrum, dessen maximale Absorptionsintensität zwischen 350 nm und 400 nm liegt, ein Emissionsspektrum, dessen maximale Emissionsintensität zwischen 560 nm und 630 nm liegt, und eine Fluoreszenzquantenausbeute in einem unpolaren Medium von größer als 0,5 aufweist.

15. Verwendung nach einem der Ansprüche 1 bis 14, wobei die Masse des Cyclophans im Bereich zwischen 0,5 % und 30 % der Masse des Kunststoff-Szintillators beträgt.

## Claims

1. Use of at least one cyclophane in a plastic scintillator, comprising a polymer matrix, as an agent for discriminating between neutrons and gamma rays.

2. Use according to claim 1, wherein the cyclophane is a compound having a cyclic structure which is formed by at least two aromatic or heteroaromatic rings and which is closed by at least two alkylene bridges -(CH₂)ₙ-, with n = 2, 3 or 4, and preferably 2.

3. Use according to claim 1 or claim 2, wherein the cyclophane replies to the general formula (I): 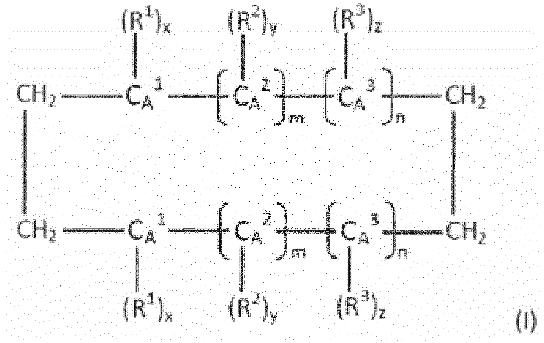 in which:
C_{A}¹ represents a monocyclic or fused polycyclic, aromatic or heteroaromatic group;
m and n, identical or different, = 0 or 1;
when m = 1, C_{A}² represents a monocyclic or fused polycyclic, aromatic or heteroaromatic group;
when n = 1, C_{A}³ represents a monocyclic or fused polycyclic, aromatic or heteroaromatic, group;
x, y and z, identical or different, = 0, 1 or 2;
when x = 1 or 2, R¹ or each of the two R¹ represents an aromatic or heteroaromatic group or else both R¹ together form a -(CH₂)₂- bridge;
when y = 1 or 2, R² or each of the two R² represents an aromatic or heteroaromatic group or else both R² together form a -(CH₂)₂- bridge; and
when z = 1 or 2, R³ or each of the two R³ represents an aromatic or heteroaromatic group or else both R³ together form a -(CH₂)₂- bridge.

4. Use according to claim 3, wherein C_{A}¹ and, where appropriate, C_{A}² and/or C_{A}³ represent a phenyl, pyrenyl, naphthyl, anthracenyl, fluoranthenyl, fluorenyl, phenanthrenyl, furyl, pyrrolyl, thienyl, oxazolyl, pyrazolyl, thiazolyl, imidazolyl, triazolyl, pyridinyl, pyranyl, pyrazinyl, pyrimidinyl, quinoleinyl, isoquinoleinyl or carbazolyl, preferably a phenyl, oxazolyl or carbazolyl group.

5. Use according to claim 3 or claim 4, wherein R¹, R² and/or R³ represent a phenyl, biphenyl, terphenyl, pyrenyl, naphthyl, anthracenyl, fluoranthenyl, fluorenyl, phenanthrenyl, furyl, pyrrolyl, thienyl, oxazolyl, pyrazolyl, thiazolyl, imidazolyl, triazolyl, pyridinyl, pyranyl, pyrazinyl, pyrimidinyl, quinoleinyl, isoquinoleinyl or carbazolyl or 5-phenyloxazolyl, preferably a phenyl, biphenyl or 5-phenyloxazolyl group.

6. Use according to any one of claims 3 to 5, wherein the cyclophane comprises two or three -(CH₂)₂- bridges.

7. Use according to any one of claims 3 to 6, wherein the cyclophane corresponds to one of the particular formulas (I-a) to (I-ac):

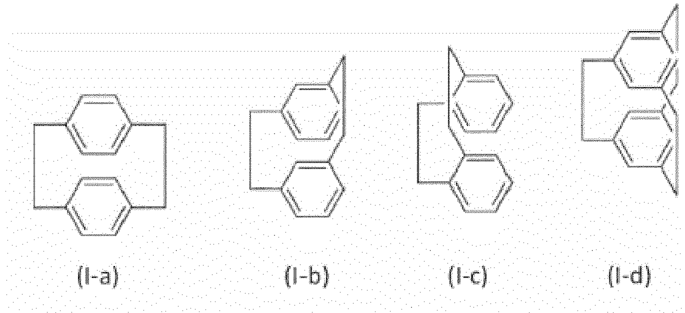

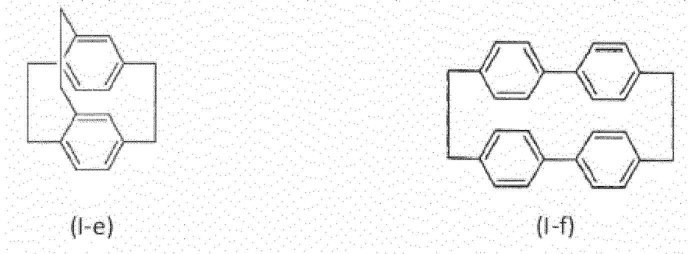

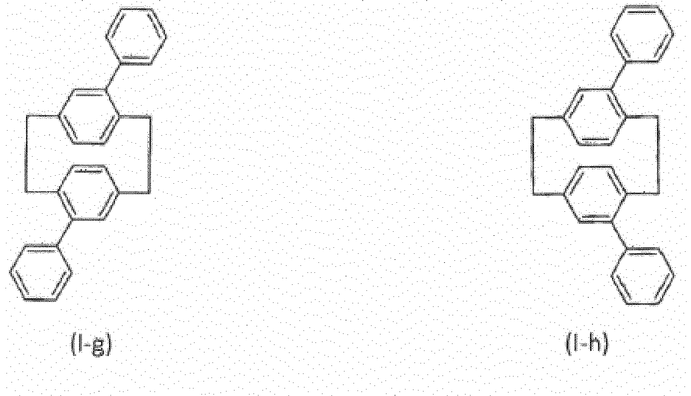

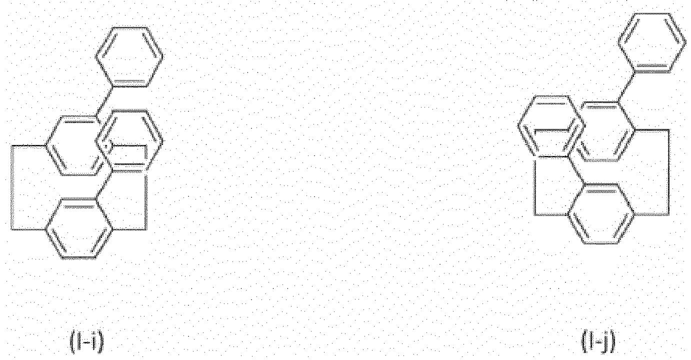

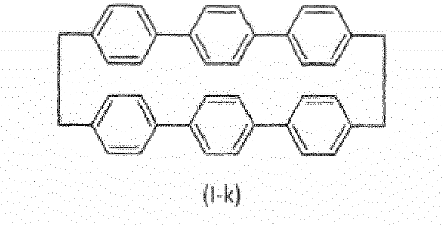

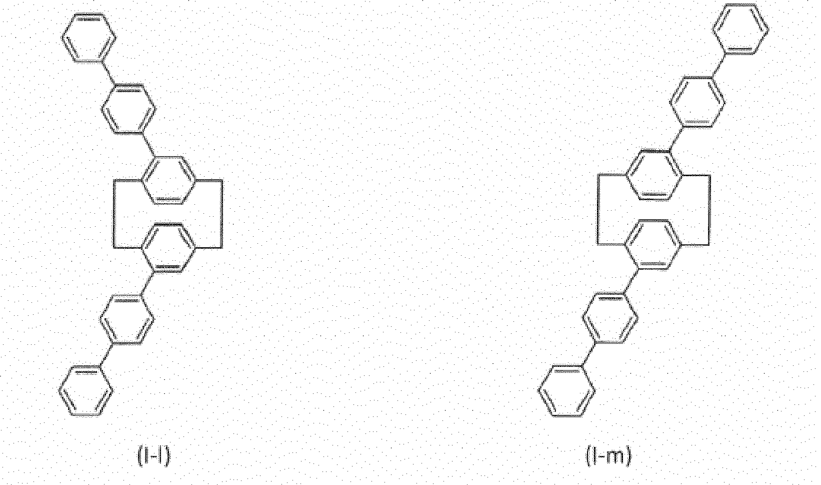

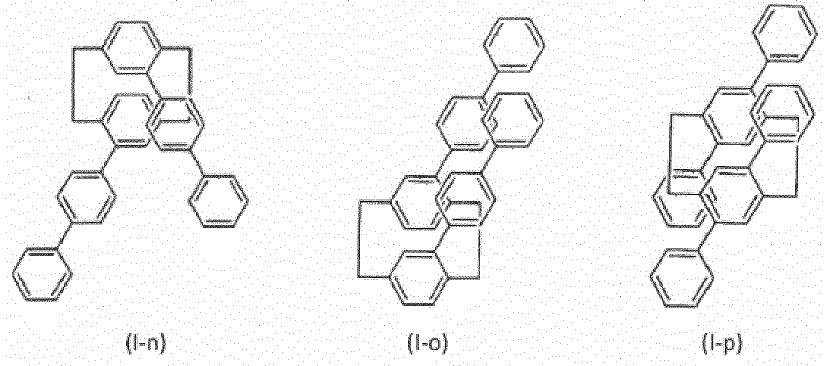

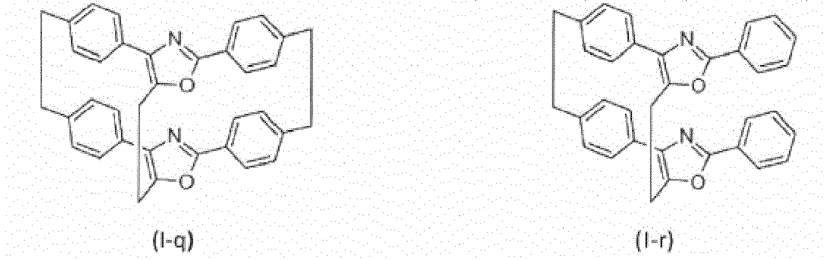

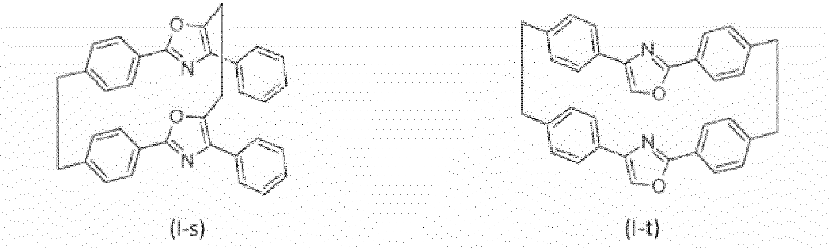

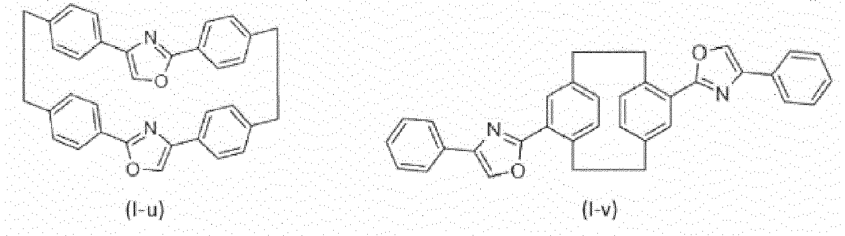

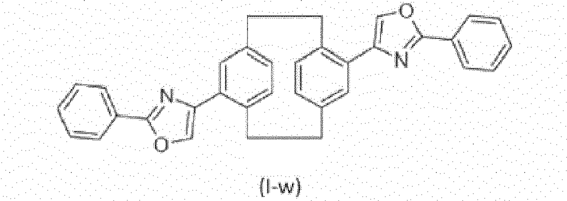

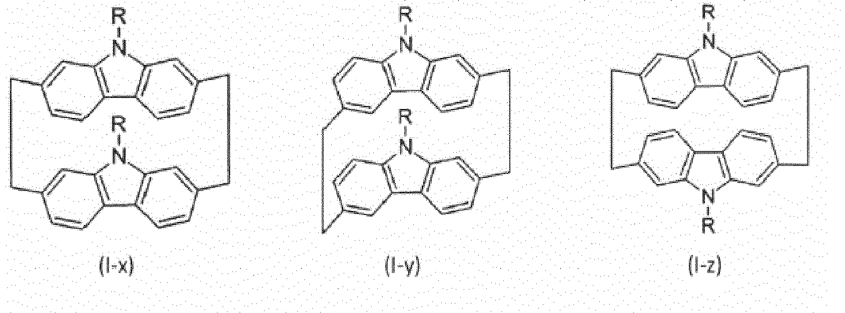

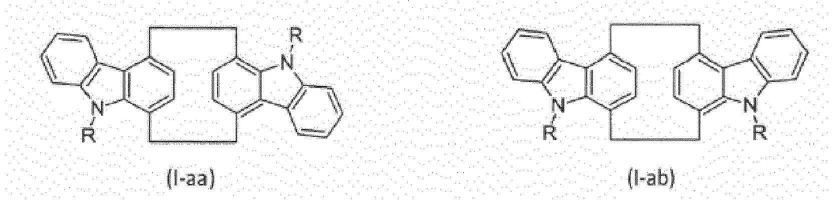

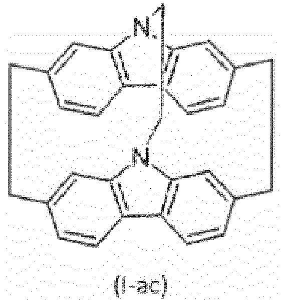

8. Use according to any one of claims 1 to 7, wherein the polymer matrix comprises a polymer resulting from a radical polymerisation of at least one polymerisable compound comprising at least one vinyl, allyl or 1-methyl-ethenyl group.

9. Use according to any one of claims 1 to 7, wherein the polymer matrix comprises a polymer resulting from a crosslinking radical polymerisation of at least one polymerisable compound comprising at least one vinyl, allyl or 1-methyl-ethenyl group, in the presence of a crosslinking agent.

10. Use according to claim 8 or claim 9, wherein the polymerisable compound is styrene, a methylstyrene isomer, a dimethylstyrene isomer, a vinylbiphenyl isomer, an allyltoluene isomer, a vinylnaphthalene isomer, *N*-vinylcarbazole, acrylic acid, methacrylic acid, acrylamide, methacrylamide, an alkyl or hydroxyalkyl acrylate comprising a C1 to C20, linear or branched, alkyl group, or an alkyl or hydroxyalkyl methacrylate comprising a C1 to C20, linear or branched, alkyl group.

11. Use according to any one of claims 8 to 10, wherein the polymer results from the radical polymerisation of a first polymerisable compound, preferably styrene, 2-vinyltoluene, 3-vinyltoluene or 4-vinyltoluene, and a second polymerisable compound, preferably acrylic acid or methacrylic acid.

12. Use according to any one of claims 1 to 11, wherein the plastic scintillator further comprises at least one first fluorophore and at least one second fluorophore and wherein:
- the first fluorophore has an absorption spectrum whose maximum absorption intensity is between 250 nm and 340 nm, an emission spectrum whose maximum emission intensity is between 310 nm and 380 nm and a fluorescence quantum yield in an apolar medium higher than 0.2, and
- the second fluorophore has an absorption spectrum whose maximum absorption intensity is between 330 nm and 400 nm, an emission spectrum whose maximum emission intensity is between 380 nm and 450 nm and a fluorescence quantum yield in an apolar medium higher than 0.2.

13. Use according to any one of claims 1 to 11, wherein the plastic scintillator further comprises at least one first fluorophore and at least one second fluorophore and wherein:
- the first fluorophore has an absorption spectrum whose maximum absorption intensity is between 250 nm and 340 nm, an emission spectrum whose maximum emission intensity is between 310 nm and 380 nm and a fluorescence quantum yield in an apolar medium higher than 0.2, and
- the second fluorophore has an absorption spectrum whose maximum absorption intensity is between 360 nm and 400 nm, an emission spectrum whose maximum emission intensity is between 470 nm and 540 nm and a fluorescence quantum yield in an apolar medium higher than 0.5.

14. Use according to any one of claims 1 to 11, wherein the plastic scintillator further comprises at least one first fluorophore and at least one second fluorophore and wherein:
- the first fluorophore has an absorption spectrum whose maximum absorption intensity is between 250 nm and 340 nm, an emission spectrum whose maximum emission intensity is between 310 nm and 380 nm and a fluorescence quantum yield in an apolar medium higher than 0.2, and
- the second fluorophore has an absorption spectrum whose maximum absorption intensity is between 350 nm and 400 nm, an emission spectrum whose maximum emission intensity is between 560 nm and 630 nm and a fluorescence quantum yield in an apolar medium higher than 0.5.

15. Use according to any one of claims 1 to 14, wherein the mass of the cyclophane is comprised between 0.5% and 30% of the mass of the plastic scintillator.
